# EUROPEAN PATENT APPLICATION

(11) **EP 4 848 785 A1**
(43) Date of publication of application: **02.12.2026**
(21) Application number: 25754501.2
(22) Date of filing: 06.02.2025
(51) Int. Cl.: H04W 24/02

(54) **POSITIONING METHOD AND POSITIONING APPARATUS**

(30) Priority: 18.02.2024 CN 202410183248
(71) Applicant: Huawei Technologies Co., Ltd., Shenzhen, Guangdong 518129 (CN)
(72) Inventor: ZHANG, Jingwei, Shenzhen, Guangdong 518129 (CN); CHEN, Ying, Shenzhen, Guangdong 518129 (CN); ZHANG, Li, Shenzhen, Guangdong 518129 (CN); XU, Bin, Shenzhen, Guangdong 518129 (CN); QIAO, Yunfei, Shenzhen, Guangdong 518129 (CN)
(74) Representative: Isarpatent
(86) International application number: PCT/CN2025/076023
(87) International publication number: WO 2025/171775

(57) **Abstract**

A positioning method and a positioning apparatus are disclosed. The method includes: receiving first positioning information sent by a first network device, where the first positioning information includes configuration information of a first positioning reference signal PRS, configuration information of a second PRS, and first indication information, and the first indication information indicates a terminal device to measure a PRS corresponding to a serving cell, or the first indication information indicates a terminal device to measure PRSs corresponding to the serving cell and a non-serving cell; determining a first measurement quantity based on the configuration information of the first PRS and the first indication information, where the first measurement quantity indicates a receive-transmit time difference corresponding to the first PRS; and when the serving cell of the terminal device is switched from a first cell to a second cell, determining a second measurement quantity based on the configuration information of the second PRS, where the second measurement quantity indicates a receive-transmit time difference corresponding to the second PRS. According to the foregoing method, after the serving cell is switched, the terminal device can measure a PRS in a targeted manner, thereby reducing signaling overheads on a network side and reducing energy consumption of the terminal device.

## Description

This application claims priority to Chinese Patent Application No. 202410183248.X, filed with the China National Intellectual Property Administration on February 18, 2024 and entitled "POSITIONING METHOD AND POSITIONING APPARATUS", which is incorporated herein by reference in its entirety.

### TECHNICAL FIELD

This application relates to the field of communication technologies, and more specifically, to a positioning method and a positioning apparatus.

### BACKGROUND

Satellite networks are a hot research topic in the world today, and satellite communication technologies have been increasingly mature. For example, non-terrestrial networks (non-terrestrial networks, NTNs) are networks or network segments that implement communication by using radio frequencies on satellites, and can provide wider coverage. In addition, satellite base stations are not vulnerable to natural disasters or external force.

However, in a single-satellite positioning scenario, a terminal device needs to measure a positioning reference signal (positioning reference signal, PRS) from a single satellite, to implement positioning or location verification of the terminal device. If a network side configures a plurality of PRSs for the terminal device at the same time, the terminal device will measure all the PRSs at the same time by default during positioning. This increases energy consumption of the terminal device. In addition, in a cell switching scenario in which a physical cell identifier (physical cell identifier, PCI) remains unchanged, after cell switching occurs, the network side needs to reconfigure and deliver a PRS. This increases signaling overheads and causes positioning latency.

### SUMMARY

This application provides a positioning method and a positioning apparatus. After a serving cell is switched, a terminal device can measure a PRS in a targeted manner, thereby reducing signaling overheads on a network side and reducing energy consumption of the terminal device.

According to a first aspect, a positioning method is provided. The method is applied to a terminal device, and a serving cell of the terminal device is a first cell. The method includes: receiving first positioning information sent by a first network device, where the first positioning information includes configuration information of a first positioning reference signal PRS, configuration information of a second PRS, and first indication information, and the first indication information indicates the terminal device to measure a PRS corresponding to the serving cell, or the first indication information indicates the terminal device to measure PRSs corresponding to the serving cell and a non-serving cell; determining a first measurement quantity based on the configuration information of the first PRS and the first indication information, where the first measurement quantity indicates a receive-transmit time difference corresponding to the first PRS; and when the serving cell of the terminal device is switched from the first cell to a second cell, determining a second measurement quantity based on the configuration information of the second PRS, where the second measurement quantity indicates a receive-transmit time difference corresponding to the second PRS.

In a possible implementation, the configuration information of the first PRS corresponds to the first cell, and the configuration information of the second PRS corresponds to the second cell.

In a possible implementation, a correspondence between the configuration information of the first PRS and the first cell and a correspondence between the configuration information of the second PRS and the second cell may be configured by the first network device. For example, a PCI sent by a network device to the terminal device may carry the foregoing correspondences.

In this embodiment of this application, the first indication information is added to the first positioning information, so that each time the serving cell is switched, the terminal device may determine, based on content indicated by the first indication information, a PRS that needs to be measured. In this manner, a network side does not need to reconfigure positioning assistance information for the terminal device, thereby reducing signaling overheads. In addition, the terminal device does not need to measure a plurality of PRSs at the same time after the serving cell is switched, thereby reducing energy consumption on a terminal device side.

With reference to the first aspect, in some implementations of the first aspect, the first indication information is bit information, and when the bit information is a first value, the first indication information indicates the terminal device to measure the PRS corresponding to the serving cell.

In this embodiment of this application, corresponding bit information is set in the first indication information to indicate specific content of the information. The terminal device may identify the content of the first indication information based on a value of the bit information, to perform data processing or decision more accurately.

With reference to the first aspect, in some implementations of the first aspect, the first indication information is bit information, and when the bit information is a second value, the first indication information indicates the terminal device to measure the PRSs corresponding to the serving cell and the non-serving cell.

In this embodiment of this application, corresponding bit information is set in the first indication information to indicate specific content of the information. The terminal device may identify the content of the first indication information based on a value of the bit information, to perform data processing or decision more accurately.

With reference to the first aspect, in some implementations of the first aspect, the method further includes: sending the first measurement quantity to the first network device, and/or sending the second measurement quantity to the first network device.

In this embodiment of this application, after determining the first measurement quantity and/or the second measurement quantity, the terminal device may send the first measurement quantity and/or the second measurement quantity to the first network device, so that the first network device positions the terminal device based on the first measurement quantity and/or the second measurement quantity.

With reference to the first aspect, in some implementations of the first aspect, the first indication information indicates the terminal device to measure the PRS corresponding to the serving cell. Before determining the second measurement quantity based on the configuration information of the second PRS, the method further includes: receiving second indication information sent by the first network device, where the second indication information indicates the terminal device to measure the second PRS.

In this embodiment of this application, when the first indication information indicates the terminal device to measure only the PRS corresponding to the serving cell, and after the serving cell is switched, the first network device may indicate, based on the second indication information, the terminal device to measure a PRS (namely, the second PRS) corresponding to a new serving cell. In this manner, it can be ensured that the terminal device measures the PRS in a timely manner, thereby helping reduce positioning latency.

With reference to the first aspect, in some implementations of the first aspect, the first measurement quantity further includes: a first downlink timing drift and a subframe offset of the receive-transmit time difference corresponding to the first PRS, and the second measurement quantity further includes: a second downlink timing drift and a subframe offset of the receive-transmit time difference corresponding to the second PRS.

With reference to the first aspect, in some implementations of the first aspect, the first cell is a cell served by a second network device, and the second cell is a cell served by a third network device.

Optionally, the second network device and the third network device may be a same network device, or may be different network devices. Further, optionally, the second network device and the third network device may be satellites or DUs.

According to a second aspect, a positioning method is provided. The method is applied to a terminal device, and a serving cell of the terminal device is a first cell. The method includes: receiving second positioning information sent by a first network device, where the second positioning information includes configuration information of a first PRS, configuration information of a second PRS, first identification information, and second identification information, the configuration information of the first PRS is associated with the first identification information, and the configuration information of the second PRS is associated with the second identification information; determining a first measurement quantity based on the configuration information of the first PRS and the first identification information, where the first measurement quantity indicates a receive-transmit time difference corresponding to the first PRS; and when the serving cell of the terminal device is switched from the first cell to a second cell, determining a second measurement quantity based on the configuration information of the second PRS and the second identification information, where the second measurement quantity indicates a receive-transmit time difference corresponding to the second PRS.

In this embodiment of this application, an association relationship between configuration information of a PRS and identification information is added to the second positioning information. After each time the serving cell is switched, the terminal device may determine, based on the association relationship between configuration information of a PRS and identification information, a PRS that needs to be measured. In this manner, a network side does not need to reconfigure positioning assistance information for the terminal device, thereby reducing signaling overheads. In addition, the terminal device does not need to measure a plurality of PRSs at the same time after the serving cell is switched, thereby reducing energy consumption on a terminal device side.

With reference to the second aspect, in some implementations of the second aspect, the first identification information is identification information corresponding to a second network device, a cell served by the second network device is the first cell, the second identification information is identification information corresponding to a third network device, and a cell served by the third network device is the second cell.

With reference to the second aspect, in some implementations of the second aspect, the first identification information identifies a first time period, the second identification information identifies a second time period, and a start moment of the second time period is later than an end moment of the first time period. Determining the first measurement quantity based on the configuration information of the first PRS and the first identification information includes: measuring the first PRS within the first time period based on the configuration information of the first PRS, to obtain the first measurement quantity. Determining the second measurement quantity based on the configuration information of the second PRS and the second identification information includes: measuring the second PRS within the second time period based on the configuration information of the second PRS, to obtain the second measurement quantity.

With reference to the second aspect, in some implementations of the second aspect, the first identification information identifies a first preset distance, and the second identification information identifies a second preset distance. Determining the first measurement quantity based on the configuration information of the first PRS and the first identification information includes: when a distance between the terminal device and a second network device is less than or equal to the first preset distance, measuring the first PRS based on the configuration information of the first PRS, to obtain the first measurement quantity, where a cell served by the second network device is the first cell. Determining the second measurement quantity based on the configuration information of the second PRS and the second identification information includes: when the distance between the terminal device and the second network device is greater than the first preset distance and/or a distance between the terminal device and a third network device is less than or equal to the second preset distance, measuring the second PRS based on the configuration information of the second PRS, to obtain the second measurement quantity, where a cell served by the third network device is the second cell.

With reference to the second aspect, in some implementations of the second aspect, the method further includes: sending the first measurement quantity to the first network device, and/or sending the second measurement quantity to the first network device.

With reference to the second aspect, in some implementations of the second aspect, the first measurement quantity further includes: a first downlink timing drift and a subframe offset of the receive-transmit time difference corresponding to the first PRS, and the second measurement quantity further includes: a second downlink timing drift and a subframe offset of the receive-transmit time difference corresponding to the second PRS.

According to a third aspect, a positioning method is provided. The method is applied to a terminal device, and a serving cell of the terminal device is a first cell. The method includes: receiving third positioning information sent by a first network device, where the third positioning information includes configuration information of a first PRS; measuring the first PRS based on the configuration information of the first PRS, to obtain a first measurement quantity, where the first measurement quantity indicates a receive-transmit time difference corresponding to the first PRS; and when the serving cell of the terminal device is switched from the first cell to a second cell, stopping measurement of the first PRS.

When the first network device configures only configuration information of one PRS, in a switching scenario in which a PCI is not changed, a new PRS (for example, a second PRS) cannot be directly configured, and there is a need to wait for wait the first network device to trigger a related positioning procedure. In this embodiment of this application, after cell switching, the terminal device may stop measurement of the first PRS, so that the terminal device measures the second PRS after receiving configuration information of the second PRS, thereby improving positioning accuracy.

With reference to the third aspect, in some implementations of the third aspect, the method further includes: receiving fourth positioning information sent by the first network device, where the fourth positioning information includes the configuration information of the second PRS; and measuring the second PRS based on the configuration information of the second PRS, to obtain a second measurement quantity, where the second measurement quantity indicates a receive-transmit time difference corresponding to the second PRS.

In this embodiment of this application, after cell switching, the terminal device may stop measurement of the first PRS, and then measure the second PRS after receiving the configuration information of the second PRS, thereby improving positioning accuracy.

With reference to the third aspect, in some implementations of the third aspect, the method further includes: sending the first measurement quantity to the first network device, and/or sending the second measurement quantity to the first network device.

With reference to the third aspect, in some implementations of the third aspect, the first measurement quantity further includes: a first downlink timing drift and a subframe offset of the receive-transmit time difference corresponding to the first PRS, and the second measurement quantity further includes: a second downlink timing drift and a subframe offset of the receive-transmit time difference corresponding to the second PRS.

With reference to the third aspect, in some implementations of the third aspect, the first cell is a cell served by a second network device, and the second cell is a cell served by a third network device.

According to a fourth aspect, a positioning method is provided. The method is applied to a fourth network device, the fourth network device establishes a communication connection to a terminal device, and a serving cell of the terminal device is a first cell. The method includes: sending third indication information to a first network device when the serving cell of the terminal device is switched from the first cell to a second cell, where the third indication information indicates the first network device to configure configuration information of a second PRS.

When the first network device configures only configuration information of one PRS, in a switching scenario in which a PCI is not changed, a new PRS (for example, the second PRS) cannot be directly configured, and there is a need to wait for the first network device to trigger a related positioning procedure. In this embodiment of this application, after cell switching, the fourth network device may send the third indication information to the first network device, to request the first network device to directly configure the new PRS (for example, the second PRS). In this way, positioning latency can be reduced.

With reference to the fourth aspect, in some implementations of the fourth aspect, the first cell is a cell served by a second network device, and the second cell is a cell served by a third network device.

According to a fifth aspect, a positioning method is provided. The method is applied to a first network device, the first network device establishes a communication connection to a terminal device, and a serving cell of the terminal device is a first cell. The method includes: receiving third indication information sent by a fourth network device, where the third indication information indicates the first network device to configure configuration information of a second PRS; and configuring the configuration information of the second PRS based on the third indication information; and sending fourth positioning information to the terminal device, where the fourth positioning information includes the configuration information of the second PRS.

When the first network device configures only configuration information of one PRS, in a switching scenario in which a PCI is not changed, a new PRS (for example, the second PRS) cannot be directly configured, and there is a need to wait for the first network device to trigger a related positioning procedure. In this embodiment of this application, after cell switching, the first network device may receive fourth positioning information sent by the first network device, and configure the new PRS (for example, the second PRS) based on the fourth positioning information. In this way, positioning latency can be reduced.

According to a sixth aspect, a positioning apparatus is provided. A serving cell of the apparatus is a first cell, and the apparatus includes a transceiver unit and a processing unit. The transceiver unit is configured to receive first positioning information sent by a first network device. The first positioning information includes configuration information of a first positioning reference signal PRS, configuration information of a second PRS, and first indication information, and the first indication information indicates the terminal device to measure a PRS corresponding to a serving cell, or the first indication information indicates the terminal device to measure PRSs corresponding to a serving cell and a non-serving cell. The processing unit is configured to: determine a first measurement quantity based on the configuration information of the first PRS and the first indication information, where the first measurement quantity indicates a receive-transmit time difference corresponding to the first PRS; and when the serving cell of the terminal device is switched from the first cell to a second cell, determine a second measurement quantity based on the configuration information of the second PRS, where the second measurement quantity indicates a receive-transmit time difference corresponding to the second PRS.

With reference to the sixth aspect, in some implementations of the sixth aspect, the first indication information is bit information, and when the bit information is a first value, the first indication information indicates the terminal device to measure the PRS corresponding to the serving cell.

With reference to the sixth aspect, in some implementations of the sixth aspect, the first indication information is bit information, and when the bit information is a second value, the first indication information indicates the terminal device to measure the PRSs corresponding to the serving cell and the non-serving cell.

With reference to the sixth aspect, in some implementations of the sixth aspect, the transceiver unit is further configured to send the first measurement quantity to the first network device, and/or send the second measurement quantity to the first network device.

With reference to the sixth aspect, in some implementations of the sixth aspect, the first indication information indicates the terminal device to measure the PRS corresponding to the serving cell. The transceiver unit is further configured to receive second indication information sent by the first network device. The second indication information indicates the terminal device to measure the second PRS.

With reference to the sixth aspect, in some implementations of the sixth aspect, the first measurement quantity further includes: a first downlink timing drift and a subframe offset of the receive-transmit time difference corresponding to the first PRS, and the second measurement quantity further includes: a second downlink timing drift and a subframe offset of the receive-transmit time difference corresponding to the second PRS.

With reference to the sixth aspect, in some implementations of the sixth aspect, the first cell is a cell served by a second network device, and the second cell is a cell served by a third network device.

According to a seventh aspect, a positioning apparatus is provided. A serving cell of the apparatus is a first cell, and the apparatus includes a transceiver unit and a processing unit. The transceiver unit is configured to receive second positioning information sent by a first network device. The second positioning information includes configuration information of a first PRS, configuration information of a second PRS, first identification information, and second identification information, the configuration information of the first PRS is associated with the first identification information, and the configuration information of the second PRS is associated with the second identification information. The processing unit is configured to: determine a first measurement quantity based on the configuration information of the first PRS and the first identification information, where the first measurement quantity indicates a receive-transmit time difference corresponding to the first PRS; and when the serving cell of the terminal device is switched from the first cell to a second cell, determine a second measurement quantity based on the configuration information of the second PRS and the second identification information, where the second measurement quantity indicates a receive-transmit time difference corresponding to the second PRS.

With reference to the seventh aspect, in some implementations of the seventh aspect, the first identification information is identification information corresponding to a second network device, a cell served by the second network device is the first cell, the second identification information is identification information corresponding to a third network device, and a cell served by the third network device is the second cell.

With reference to the seventh aspect, in some implementations of the seventh aspect, the first identification information identifies a first time period, the second identification information identifies a second time period, and a start moment of the second time period is later than an end moment of the first time period. The processing unit is specifically configured to: measure the first PRS within the first time period based on the configuration information of the first PRS, to obtain the first measurement quantity; and measure the second PRS within the second time period based on the configuration information of the second PRS, to obtain the second measurement quantity.

With reference to the seventh aspect, in some implementations of the seventh aspect, the first identification information identifies a first preset distance, and the second identification information identifies a second preset distance. The processing unit is specifically configured to: when a distance between the terminal device and a second network device is less than or equal to the first preset distance, measure the first PRS based on the configuration information of the first PRS, to obtain the first measurement quantity, where a cell served by the second network device is the first cell; and when the distance between the terminal device and the third network device is greater than the first preset distance, and/or a distance between the terminal device and the third network device is less than or equal to the second preset distance, measure the second PRS based on the configuration information of the second PRS, to obtain the second measurement quantity, where a cell served by the third network device is the second cell.

With reference to the seventh aspect, in some implementations of the seventh aspect, the transceiver unit is further configured to send the first measurement quantity to the first network device, and/or send the second measurement quantity to the first network device.

With reference to the seventh aspect, in some implementations of the seventh aspect, the first measurement quantity further includes: a first downlink timing drift and a subframe offset of the receive-transmit time difference corresponding to the first PRS, and the second measurement quantity further includes: a second downlink timing drift and a subframe offset of the receive-transmit time difference corresponding to the second PRS.

According to an eighth aspect, a positioning apparatus is provided. A serving cell of the apparatus is a first cell, and the apparatus includes a transceiver unit and a processing unit. The transceiver unit is configured to receive third positioning information sent by a first network device. The third positioning information includes configuration information of a first PRS. The processing unit is configured to: measure the first PRS based on the configuration information of the first PRS, to obtain a first measurement quantity, where the first measurement quantity indicates a receive-transmit time difference corresponding to the first PRS; and when the serving cell of the terminal device is switched from the first cell to a second cell, stop measurement of the first PRS.

With reference to the eighth aspect, in some implementations of the eighth aspect, the transceiver unit is further configured to receive fourth positioning information sent by the first network device. The fourth positioning information includes configuration information of a second PRS. The processing unit is further configured to measure the second PRS based on the configuration information of the second PRS, to obtain a second measurement quantity. The second measurement quantity indicates a receive-transmit time difference corresponding to the second PRS.

With reference to the eighth aspect, in some implementations of the eighth aspect, the transceiver unit is further configured to send the first measurement quantity to the first network device, and/or send the second measurement quantity to the first network device.

With reference to the eighth aspect, in some implementations of the eighth aspect, the first measurement quantity further includes: a first downlink timing drift and a subframe offset of the receive-transmit time difference corresponding to the first PRS, and the second measurement quantity further includes: a second downlink timing drift and a subframe offset of the receive-transmit time difference corresponding to the second PRS.

According to a ninth aspect, a positioning apparatus is provided. The positioning apparatus establishes a communication connection to a terminal device, a serving cell of the terminal device is a first cell, and the apparatus includes a transceiver unit. The transceiver unit is configured to send third indication information to a first network device when the serving cell of the terminal device is switched from the first cell to a second cell. The third indication information indicates the first network device to configure configuration information of a second PRS.

With reference to the ninth aspect, in some implementations of the ninth aspect, the first cell is a cell served by a second network device, and the second cell is a cell served by a third network device.

According to a tenth aspect, a positioning apparatus is provided. The apparatus establishes a communication connection to a terminal device, a serving cell of the terminal device is a first cell, and the apparatus includes a transceiver unit and a processing unit. The transceiver unit is configured to receive third indication information sent by a fourth network device. The third indication information indicates a first network device to configure configuration information of a second PRS. The processing unit is configured to configure the configuration information of the second PRS based on the third indication information. The transceiver unit is further configured to send fourth positioning information to the terminal device. The fourth positioning information includes the configuration information of the second PRS.

According to an eleventh aspect, a positioning apparatus is provided, including at least one processor, configured to enable the apparatus to implement the method according to any one of the implementations of the first aspect to the fifth aspect.

With reference to the eleventh aspect, in some implementations of the eleventh aspect, the apparatus further includes a memory. The at least one processor is coupled to the memory, and is configured to read and execute instructions in the memory, so that the apparatus implements the method according to any one of the implementations of the first aspect to the fifth aspect.

With reference to the eleventh aspect, in some implementations of the eleventh aspect, the apparatus further includes a communication interface. The at least one processor is coupled to the communication interface, and is configured to control communication between the communication interface and another device.

With reference to the eleventh aspect, in some implementations of the eleventh aspect, the communication interface is a transceiver or an input/output interface.

According to a twelfth aspect, a chip is provided. The chip includes a circuit. The circuit is configured to perform the method according to any one of the implementations of the first aspect to the fifth aspect.

With reference to the twelfth aspect, in some implementations of the twelfth aspect, the circuit is a processing circuit or a logic circuit.

With reference to the twelfth aspect, in some implementations of the twelfth aspect, the chip further includes an input/output interface, and the circuit is configured to control the input/output interface to implement communication with another device.

According to a thirteenth aspect, a computer-readable storage medium is provided. The computer-readable storage medium stores program code. When the computer program code is run on a computer, the computer is enabled to perform the method according to any one of the implementations of the first aspect to the fifth aspect.

According to a fourteenth aspect, a computer program product is provided. The computer product includes a computer program. When the computer program is run, a computer is enabled to perform the method according to any one of the implementations of the first aspect to the fifth aspect.

### BRIEF DESCRIPTION OF DRAWINGS

FIG. 1 is a diagram of a multi-round trip time positioning technology according to an embodiment of this application;
FIG. 2A to FIG. 2C show system architectures to which a positioning method is applicable according to an embodiment of this application;
FIG. 3 is a schematic flowchart of a positioning method according to an embodiment of this application;
FIG. 4 is a schematic flowchart of another positioning method according to an embodiment of this application;
FIG. 5 is a schematic flowchart of another positioning method according to an embodiment of this application;
FIG. 6 is a schematic flowchart of another positioning method according to an embodiment of this application;
FIG. 7 is a schematic flowchart of another positioning method according to an embodiment of this application;
FIG. 8 is a schematic flowchart of another positioning method according to an embodiment of this application;
FIG. 9 is a schematic flowchart of another positioning method according to an embodiment of this application;
FIG. 10 is a schematic flowchart of another positioning method according to an embodiment of this application;
FIG. 11 is a diagram of a positioning apparatus according to an embodiment of this application; and
FIG. 12 is a diagram of another positioning apparatus according to an embodiment of this application.

### DESCRIPTION OF EMBODIMENTS

The following describes technical solutions of this application with reference to accompanying drawings.

In descriptions of embodiments of this application, "/" means "or" unless otherwise specified. For example, A/B may indicate A or B. In this specification, "and/or" merely describes an association relationship between associated objects and indicates that three relationships may exist. For example, A and/or B may indicate the following three cases: Only A exists, both A and B exist, and only B exists. In this application, at least one means one or more, and a plurality of means two or more. "At least one of the following items (pieces)" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

In embodiments of this application, prefix words such as "first" and "second" are used only to distinguish between different described objects, and do not limit locations, a sequence, priorities, quantities, content, or the like of the described objects. Use of prefix words such as ordinal numbers used to distinguish between the described objects in embodiments of this application does not constitute a limitation on the described objects. For descriptions of the described objects, refer to the context descriptions in the claims or embodiments. The use of such prefix words should not constitute a redundant limitation.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or a new radio (new radio, NR) system, and a future communication system.

A terminal device (user equipment, UE) in embodiments of this application may be user equipment, an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (Session Initiation Protocol, SIP) phone, a wireless local loop (wireless local loop, WLL) station, a personal digital assistant (personal digital assistant, PDA), a handheld device with a wireless communication function, a compute device, another processing device connected to a wireless modem, an in-vehicle device, a wearable device, a terminal device in a 5G network, a terminal device in a future communication network, a terminal device in a future evolved public land mobile network (public land mobile network, PLMN), or the like. This is not limited in embodiments of this application.

A network device in embodiments of this application may be a device configured to communicate with the terminal device. The network device may be an apparatus that is in a radio access network (radio access network, RAN) and that provides a wireless communication function for the terminal device, and is referred to as a RAN device. For example, the network device may be a base station (base station, BS), an evolved NodeB (evolved NodeB, eNodeB), a transmission reception point (transmission reception point, TRP), a next generation NodeB (next generation NodeB, gNB) in a 5G mobile communication system, a base station in a future mobile communication system, an access node in a Wi-Fi system, or the like; or may be a module or a unit that completes some functions of the base station, for example, may be a central unit (central unit, CU) or a distributed unit (distributed unit, DU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete some or all functions of a physical layer. For specific descriptions of the foregoing protocol layers, refer to related technical specifications of the 3rd generation partnership project (3rd generation partnership project, 3GPP). The network device may be a macro base station, or may be a micro base station or an indoor base station, or may be a relay node, a donor node, or the like. A specific technology and a specific device form that are used for the network device are not limited in embodiments of this application.

In another possible scenario, a plurality of RAN nodes collaborate to assist the terminal in implementing radio access, and different RAN nodes respectively implement some functions of the base station. For example, the RAN node may be a CU, a DU, a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an open radio access network (open radio access network, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of the software module and the hardware module.

In embodiments of this application, the functions of the network device may be performed by a module (for example, a chip) in the network device, or may be performed by a control subsystem including the functions of the network device. The control subsystem including the function of the network device may be a control center in the foregoing application scenarios such as smart grid, industrial control, intelligent transportation, and a smart city. The function of the terminal device may alternatively be performed by a module (for example, a chip or a modem) in the terminal device, or may be performed by an apparatus including the function of the terminal device.

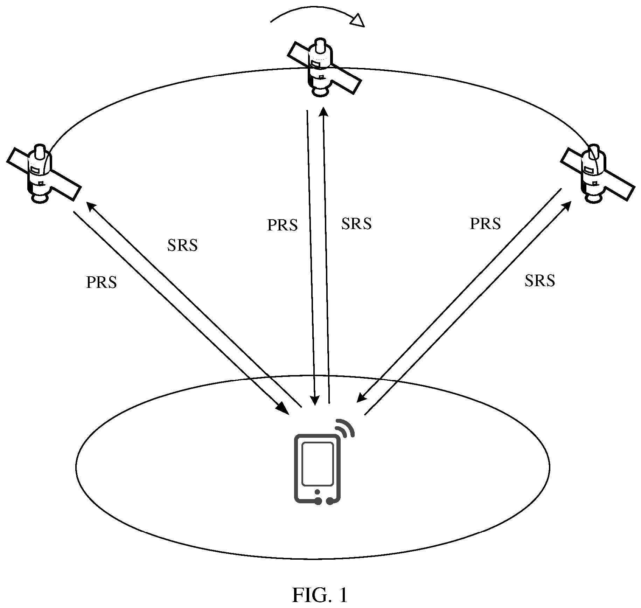

For ease of understanding of embodiments of this application, concepts and technologies used in embodiments of this application are first briefly described.
(1) A transmission and reception point (transmission and reception point, TRP): a group of geographically co-located antennas (for example, an antenna array (having one or more antenna elements)) that support a transmission point (Transmission Point, TP) function and/or a reception point (Reception Point, RP) function. In an NTN scenario, the TRP may be deployed on a satellite, an uncrewed aerial vehicle, an airship, a high-altitude platform, or the like, or may be deployed on a base station, an NTN gateway, a terrestrial station, or the like. This is not limited in embodiments of this application.
(2) Downlink time difference of arrival (downlink time difference of arrival, DL-TDOA): A downlink signal used for DL-TDOA positioning is a PRS, and UE measures a receive time difference between PRSs from different TRPs or gNBs and reports the time difference to a positioning server. The positioning server then calculates a location of the UE based on a known location of the TRP or the gNB and the receive time difference between the PRSs.
(3) Uplink time difference of arrival (uplink time difference of arrival, UL-TDOA): UE sends a first sounding reference signal (sounding reference signal, SRS), and a plurality of TRPs receive the SRS, and report a relative time difference of arrival to a positioning server. The positioning server then estimates a location of the UE based on the time difference of arrival of the reference signal and a known location of the TRP.
(4) Multi-round trip time (multi-round trip time, multi-RTT): In a multi-RTT positioning technology, UE and a gNB measure receive-transmit time differences of a PRS and an SRS, and report corresponding measurement quantities to a positioning server. The positioning server calculates a location of the UE based on a known location of a TRP or the gNB. For example, as shown in FIG. 1, when a satellite moves to different locations, RTT between a terminal and a base station is measured based on receive-transmit time differences of a PRS and an SRS. A network side may consider that the satellite at different locations is equivalent to a plurality of gNBs, to position the terminal by using a known location of the satellite and RTT measured a plurality of times.

The following describes technical problems to be resolved and technical solutions used in this application.

Compared with terrestrial communication, satellite communication has been widely used in many fields such as aviation and energy because of its wide coverage, no geographical environment limitation, and high reliability. Currently, as an extremely important communication scenario in 5G communication, satellite communication has been introduced by the 3rd generation partnership project (3rd generation partnership project, 3GPP) under the name of NTN. Satellite communication can provide communication services for areas that cannot be covered or are insufficiently covered by a terrestrial network; can also provide stable emergency communication in a case of natural disasters or large-scale sports events; can provide high-quality communication services for users on transportation means such as trains, ships, and airplanes; and can provide dedicated services for government and enterprise users to meet specific service requirements.

In the satellite communication, a satellite cell usually covers a large area, and may cross a boundary to cover a plurality of countries and regions. Therefore, when a satellite provides communication services such as disaster warning, an emergency call, and charging in compliance with laws and regulations of a country or a region, a location of a terminal device usually needs to be known. Although the terminal device on the ground may obtain its own location by using a positioning system, location information reported by the terminal device on the ground may be tampered with, or reported location information may be affected by interference and have a large error. Therefore, a network side usually needs to position the terminal device on the ground or verify the reported location information.

Currently, in a terrestrial network, there are a plurality of methods for positioning the terminal device, for example, using an uplink time difference of arrival, a downlink time difference of arrival, or multi-round trip time.

However, in a single-satellite positioning scenario, the terminal device needs to measure a PRS signal from a single satellite, to implement positioning or location verification of the terminal device. If the network side configures a plurality of PRSs for the terminal device at the same time, the terminal device measures all the PRSs at the same time by default during positioning. This increases energy consumption of the terminal device. If the network side configures only one PRS, after cell switching occurs, the network side needs to reconfigure and deliver a PRS. This increases signaling overheads and positioning latency. In addition, in a scenario in which a PCI does not change, the network side usually cannot directly configure the PRS. If the network side configures the PRS, a positioning-related procedure needs to be triggered again, which causes latency. In addition, if the terminal device continues to measure a PRS of a source cell, quality of the measured signal is poor, and positioning accuracy is also reduced.

Embodiments of this application provide a positioning method and a positioning apparatus. After a serving cell is switched, a terminal device may measure a PRS in a targeted manner, thereby reducing signaling overheads on a network side and reducing energy consumption of the terminal device.

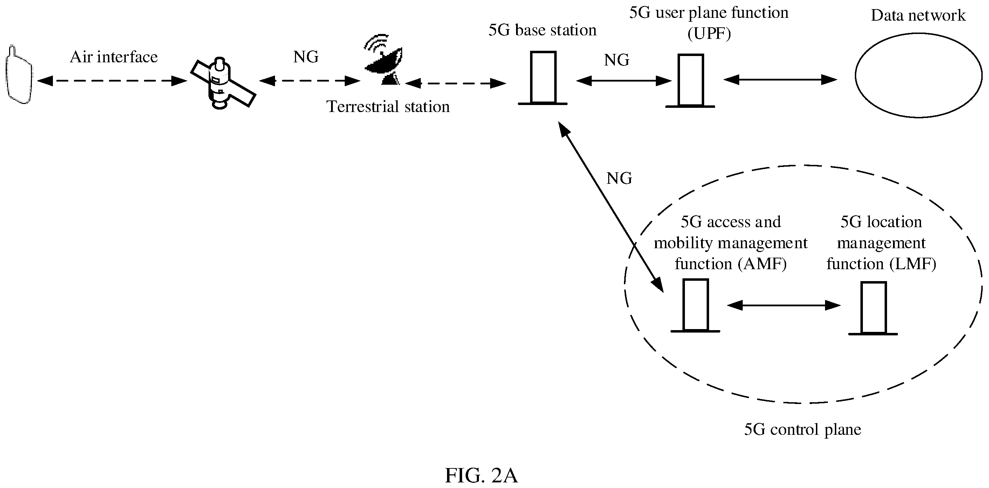

FIG. 2A to FIG. 2C show system architectures to which a communication method is applicable according to an embodiment of this application.

As shown in FIG. 2A to FIG. 2C, the system architecture may include a terminal device, a satellite, a 5G base station, a 5G core network, and a terrestrial station. The terminal device may access a satellite network through an air interface, and initiate a service like a call or Internet access. The satellite may establish a connection to the terrestrial station through an Xn or NG interface, and the terrestrial station may be responsible for forwarding signaling and service data between the satellite and the 5G core network.

In a possible implementation, as shown in FIG. 2A, the 5G base station may be deployed on the ground and connected to the terrestrial station, and the terrestrial station and the 5G base station may be connected to the core network through an NG interface.

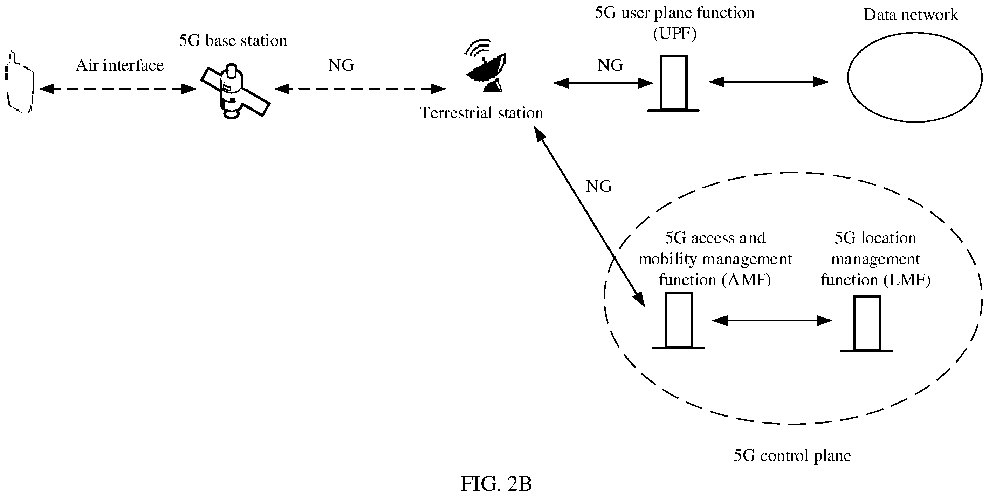

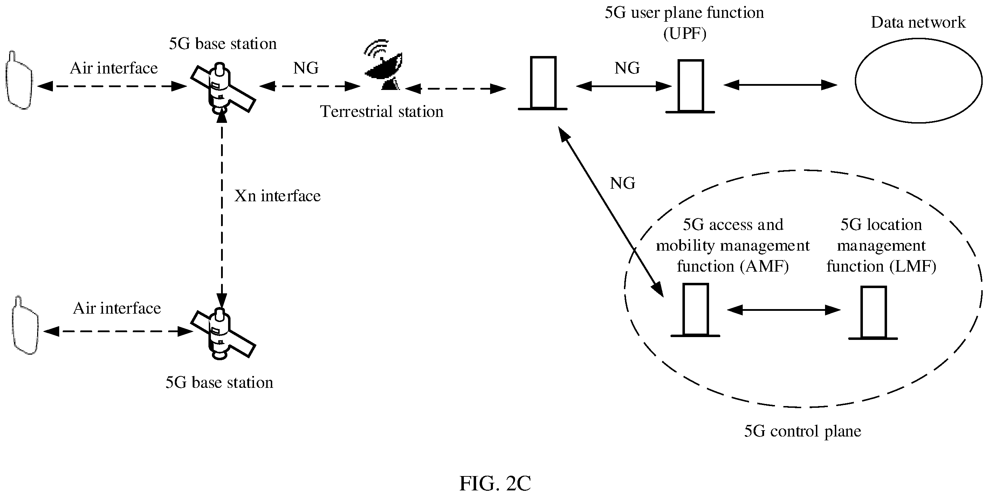

In a possible implementation, as shown in FIG. 2B and FIG. 2C, the 5G base station or some base station functions of the 5G base station may be deployed on the satellite, and the terrestrial station may be connected to the core network through an NG interface.

In the system architecture, there may be a plurality of satellites. When the 5G base station is deployed on the ground and the satellites can implement only a transparent forwarding function, only the transparent forwarding function is implemented between the satellites. When the base station or some base station functions are deployed on the satellites, signaling exchange and user data transmission between base stations can be completed between the satellites.

It should be understood that, in the system architecture shown in FIG. 2A to FIG. 2C, the air interface may be a radio link between the terminal device and the 5G base station. The Xn interface may be an interface between the 5G base station and another base station, and is mainly used for signaling exchange such as cell switching. The NG interface may be an interface between the 5G base station and the core network, and is mainly used for exchanging signaling of the core network and service data of a user. In embodiments of this application, the Xn interface may alternatively be replaced with an X2 interface, and the NG interface may be replaced with an S1 interface.

It should be further understood that the system architecture shown in FIG. 2A to FIG. 2C is merely an example for description. The system architecture may alternatively be replaced with an architecture applicable to a long term evolution system, an LTE frequency division duplex system, an LTE time division duplex system, a universal mobile telecommunications system, a Worldwide Interoperability for Microwave Access communication system, and a future 6^{th} generation system.

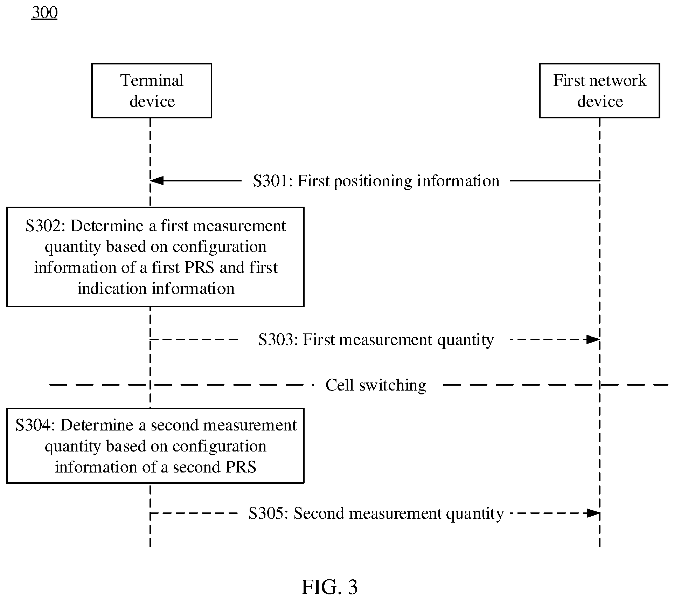

FIG. 3 is a schematic flowchart of a positioning method according to an embodiment of this application. The method 300 may include step S301 to step S305.

S301: A terminal device receives first positioning information sent by a first network device.

A serving cell of the terminal device is a first cell, and the first network device may be a location management function (location management function, LMF).

The first positioning information includes configuration information of a first PRS, configuration information of a second PRS, and first indication information. The first indication information indicates the terminal device to measure a PRS corresponding to the serving cell, or the first indication information indicates the terminal device to measure PRSs corresponding to the serving cell and a non-serving cell.

Optionally, the configuration information of the first PRS corresponds to the first cell, the configuration information of the second PRS corresponds to a second cell, the first cell is a cell served by a second network device, and the second cell is a cell served by a third network device.

In a possible implementation, a correspondence between the configuration information of the first PRS and the first cell and a correspondence between the configuration information of the second PRS and the second cell may be configured by the first network device. For example, a PCI sent by the network device to the terminal device may carry the foregoing correspondences.

Optionally, the second network device and the third network device may be a same network device, or may be different network devices. Further, optionally, the second network device and the third network device may be satellites or DUs.

Optionally, the configuration information of the first PRS and the configuration information of the second PRS may include one or more of PRS-PointA information, PRS positioning scenario information, or a PRS ID.

In a possible implementation, the first indication information may be bit information. When the bit information is a first value, the first indication information may indicate the terminal device to measure only the PRS corresponding to the serving cell.

For example, when the bit information is 1, the first indication information indicates the terminal device to measure only the first PRS corresponding to the serving cell.

In a possible implementation, the first indication information may be bit information. When the bit information is a first value, the first indication information may indicate the terminal device to measure the PRS corresponding to the serving cell. When the bit information is a second value, the first indication information indicates the terminal device to measure the PRSs corresponding to the serving cell and the non-serving cell.

For example, when the bit information is 1, the first indication information indicates the terminal device to measure the first PRS corresponding to the serving cell. Alternatively, when the bit information is 0, the first indication information indicates the terminal device to measure the PRSs corresponding to the serving cell and the non-serving cell.

S302: The terminal device determines a first measurement quantity based on the configuration information of the first PRS and the first indication information.

The first measurement quantity indicates a receive-transmit time difference corresponding to the first PRS.

Optionally, the first measurement quantity further includes a first downlink timing drift and a subframe offset of the receive-transmit time difference corresponding to the first PRS.

S303: The terminal device sends the first measurement quantity to the first network device.

Step S303 may be an optional step, that is, step S303 may not be performed in the method 300.

Optionally, after the first network device receives the first measurement quantity, the first network device may position the terminal device based on the first measurement quantity.

S304: The terminal device determines a second measurement quantity based on the configuration information of the second PRS.

Step S304 may be performed after the serving cell of the terminal device is switched from the first cell to the second cell.

In a possible implementation, when the first indication information indicates the terminal device to measure only the PRS corresponding to the serving cell, before cell switching, the terminal device may measure the first cell based on the first indication information, to determine the first measurement quantity. After cell switching, the terminal device may measure the second cell based on the first indication information, to determine the second measurement quantity, and the first network device does not need to reconfigure positioning assistance information (for example, second indication information) for the terminal device after cell switching.

The second measurement quantity indicates a receive-transmit time difference corresponding to the second PRS.

Optionally, the second measurement quantity further includes a second downlink timing drift and a subframe offset of the receive-transmit time difference corresponding to the second PRS.

In a possible implementation, when the first indication information indicates the terminal device to measure the PRS corresponding to the serving cell, after the serving cell is switched, the terminal device may still measure the first PRS. After receiving the second indication information sent by the first network device, the terminal device may determine the second measurement quantity based on the configuration information of the second PRS. In this way, it can be ensured that the terminal device measures the PRS in a timely manner, which helps reduce positioning latency. The second indication information indicates the terminal device to measure the second PRS.

S305: The terminal device sends the second measurement quantity to the first network device.

Step S305 may be an optional step, that is, step S305 may not be performed in the method 300.

Optionally, after the first network device receives the second measurement quantity, the first network device may position the terminal device based on the second measurement quantity.

In this embodiment of this application, the first indication information is added to the first positioning information, so that each time the serving cell is switched, the terminal device may determine, based on content indicated by the first indication information, a PRS that needs to be measured. In this manner, a network side does not need to reconfigure positioning assistance information for the terminal device, thereby reducing signaling overheads. In addition, the terminal device does not need to measure a plurality of PRSs at the same time after the serving cell is switched, thereby reducing energy consumption on a terminal device side.

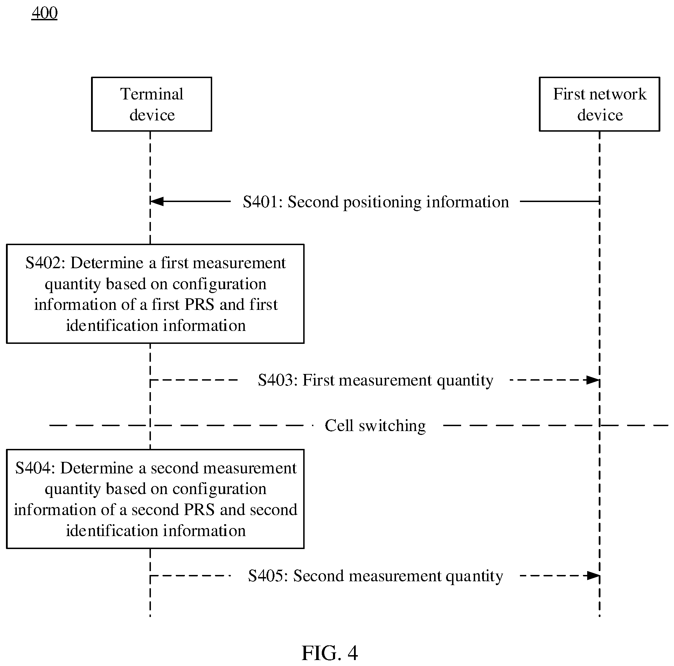

FIG. 4 is a schematic flowchart of another positioning method according to an embodiment of this application. The method 400 may include step S401 to step S405.

S401: A terminal device receives second positioning information sent by a first network device.

A serving cell of the terminal device is a first cell, and the first network device may be an LMF.

The second positioning information includes configuration information of a first PRS, configuration information of a second PRS, first identification information, and second identification information. The configuration information of the first PRS is associated with the first identification information, and the configuration information of the second PRS is associated with the second identification information.

Optionally, the configuration information of the first PRS corresponds to the first cell, the configuration information of the second PRS corresponds to a second cell, the first cell is a cell served by a second network device, and the second cell is a cell served by a third network device.

Optionally, the second network device and the third network device may be a same network device, or may be different network devices. Further, optionally, the second network device and the third network device may be satellites or DUs.

In a possible implementation, the first identification information is identification information corresponding to the second network device, and the second identification information is identification information corresponding to the third network device.

In a possible implementation, the first identification information identifies a first time period, the second identification information identifies a second time period, and a start moment of the second time period is later than an end moment of the first time period.

In a possible implementation, the first identification information identifies a first preset distance, and the second identification information identifies a second preset distance.

S402: The terminal device determines a first measurement quantity based on the configuration information of the first PRS and the first identification information.

The first measurement quantity indicates a receive-transmit time difference corresponding to the first PRS.

Optionally, the first measurement quantity further includes a first downlink timing drift and a subframe offset of the receive-transmit time difference corresponding to the first PRS.

In a possible implementation, when the first identification information is the identification information corresponding to the second network device, step S402 specifically includes: measuring the first PRS based on the identification information of the second network device and the configuration information of the first PRS, to obtain the first measurement quantity.

In a possible implementation, when the first identification information identifies the first time period, step S402 specifically includes: measuring the first PRS within the first time period based on the configuration information of the first PRS, to obtain the first measurement quantity.

In a possible implementation, when the first identification information identifies the first preset distance, step S402 specifically includes: when a distance between the terminal device and the second network device is less than or equal to the first preset distance, measuring the first PRS based on the configuration information of the first PRS, to obtain the first measurement quantity.

S403: The terminal device sends the first measurement quantity to the first network device.

Step S403 may be an optional step, that is, step S403 may not be performed in the method 400.

Optionally, after the first network device receives the first measurement quantity, the first network device may position the terminal device based on the first measurement quantity.

S404: The terminal device determines a second measurement quantity based on the configuration information of the second PRS and the second identification information.

Step S404 may be performed after the serving cell of the terminal device is switched from the first cell to the second cell.

The second measurement quantity indicates a receive-transmit time difference corresponding to the second PRS.

Optionally, the second measurement quantity further includes a second downlink timing drift and a subframe offset of the receive-transmit time difference corresponding to the second PRS.

In a possible implementation, when the second identification information is the identification information corresponding to the third network device, step S404 specifically includes: measuring the second PRS based on the identification information of the third network device and the configuration information of the second PRS, to obtain the second measurement quantity.

In a possible implementation, when the second identification information identifies the second time period, step S404 specifically includes: measuring the second PRS within the second time period based on the configuration information of the second PRS, to obtain the second measurement quantity.

In a possible implementation, when the second identification information identifies the second preset distance, step S404 specifically includes: when the distance between the terminal device and the third network device is greater than the first preset distance, and/or a distance between the terminal device and the third network device is less than or equal to the second preset distance, measuring the second PRS based on the configuration information of the second PRS, to obtain the second measurement quantity.

S405: The terminal device sends the second measurement quantity to the first network device.

Step S405 may be an optional step, that is, step S405 may not be performed in the method 400.

Optionally, after the first network device receives the second measurement quantity, the first network device may position the terminal device based on the second measurement quantity.

In this embodiment of this application, an association relationship between configuration information of a PRS and identification information is added to the second positioning information. After each time the serving cell is switched, the terminal device may determine, based on the association relationship between the configuration information of the PRS and the identification information, a PRS that needs to be measured. In this manner, a network side does not need to reconfigure positioning assistance information for the terminal device, thereby reducing signaling overheads. In addition, the terminal device does not need to measure a plurality of PRSs at the same time after the serving cell is switched, thereby reducing energy consumption on a terminal device side.

It should be understood that, in the method 300 and the method 400, an example in which the first network device configures the configuration information of the two PRSs is used for description. The method 300 and the method 400 may be further applicable to a scenario in which the first network device configures configuration information of a plurality of PRSs, or may be applicable to a scenario in which the first network device configures configuration information of a plurality of SRSs. Details are not described in this application.

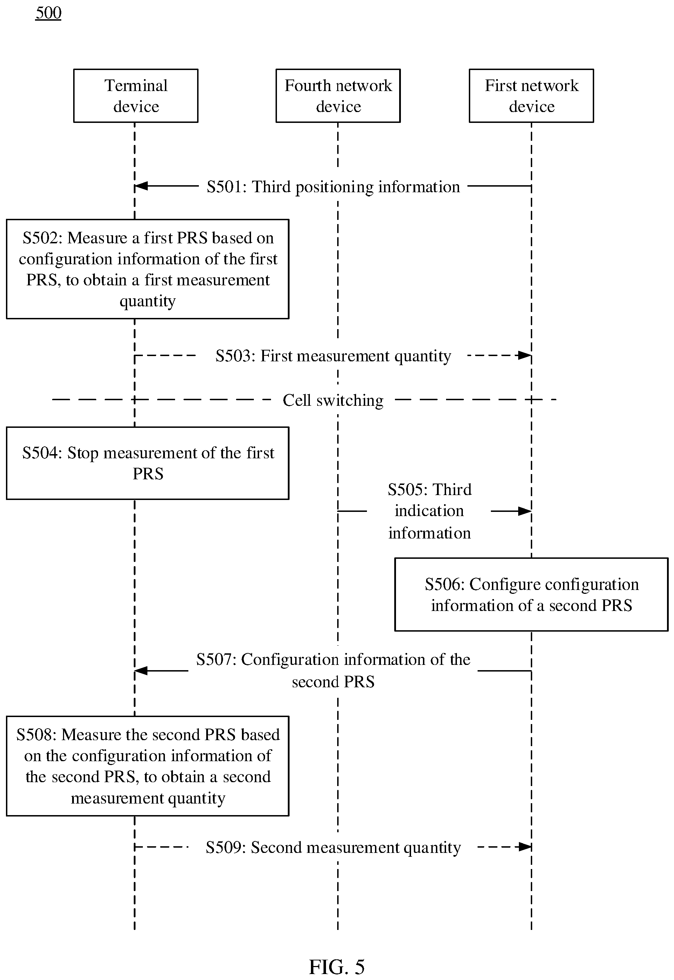

FIG. 5 is a schematic flowchart of another positioning method according to an embodiment of this application. The method 500 includes step S501 to step S509.

S501: A terminal device receives third positioning information sent by a first network device.

A serving cell of the terminal device is a first cell, the first network device may be an LMF, and the fourth network device may be a gNB or a TRP.

The third positioning information includes configuration information of a first PRS, the configuration information of the first PRS corresponds to the first cell, and the first cell may be a cell served by a second network device.

S502: The terminal device measures the first PRS based on the configuration information of the first PRS, to obtain a first measurement quantity.

The first measurement quantity indicates a receive-transmit time difference corresponding to the first PRS.

Optionally, the first measurement quantity further includes a first downlink timing drift and a subframe offset of the receive-transmit time difference corresponding to the first PRS.

S503: The terminal device sends the first measurement quantity to the first network device.

Step S503 may be an optional step, that is, step S503 may not be performed in the method 500.

Optionally, after the first network device receives the first measurement quantity, the first network device may position the terminal device based on the first measurement quantity.

S504: The terminal device stops measurement of the first PRS.

Step S504 may be performed after the serving cell of the terminal device is switched from the first cell to a second cell.

S505: The fourth network device sends third indication information to the first network device.

The third indication information may indicate the first network device to configure configuration information of a second PRS, the configuration information of the second PRS corresponds to the second cell, and the second cell is a cell served by a third network device.

S506: The first network device configures the configuration information of the second PRS.

For example, after receiving the third indication information, the first network device may configure the configuration information of the second PRS.

S507: The first network device sends the configuration information of the second PRS to the terminal device.

Optionally, the first network device may send fourth positioning information to the terminal device. The fourth positioning information includes the configuration information of the second PRS.

S508: The terminal device measures the second PRS based on the configuration information of the second PRS, to obtain a second measurement quantity.

The second measurement quantity indicates a receive-transmit time difference corresponding to the second PRS.

Optionally, the second measurement quantity further includes a second downlink timing drift and a subframe offset of the receive-transmit time difference corresponding to the second PRS.

S509: The terminal device sends the second measurement quantity to the first network device.

Step S509 may be an optional step, that is, step S509 may not be performed in the method 500.

Optionally, after the first network device receives the first measurement quantity, the first network device may position the terminal device based on the second measurement quantity.

When the first network device configures only configuration information of one PRS, in a switching scenario in which a PCI is not changed, a new PRS (for example, the second PRS) cannot be directly configured, and there is a need to wait for the first network device to trigger a related positioning procedure. In this embodiment of this application, after cell switching, the terminal device may stop measurement of the first PRS, and the fourth network device may send the third indication information to the first network device, to indicate the first network device to directly configure the configuration information of the second PRS. After receiving the configuration information of the second PRS sent by the first network device, the terminal device measures the second PRS. In this way, positioning accuracy can be improved.

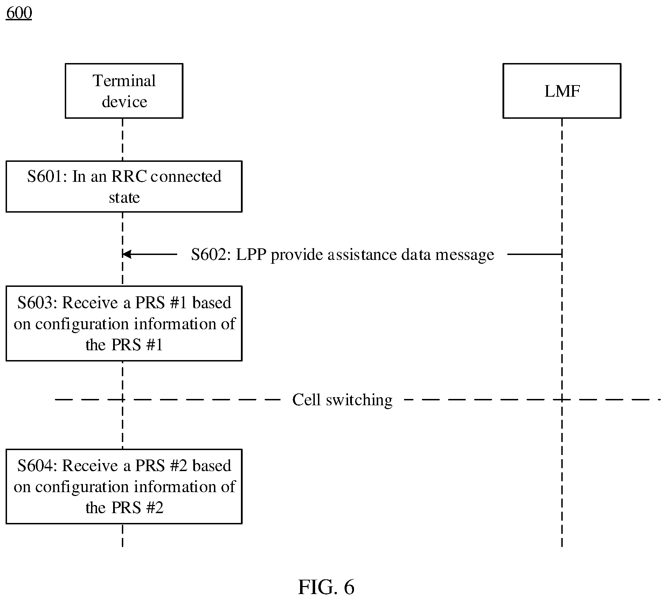

FIG. 6 is a schematic flowchart of another positioning method according to an embodiment of this application. The method 600 may be specific descriptions of step S301 to step S305 in the method 300. The method 600 may include step S601 to step S604.

S601: The terminal device is in a radio resource control (radio resource control, RRC) connected state.

This step may also be understood as that the terminal device establishes an RRC connection, that is, the terminal device establishes a connection to a network device (for example, the LMF), and may perform data transmission and communication services.

S602: The LMF sends an LPP provide assistance data (LPP Provide Assistance Data) message to the terminal device.

The LPP provide assistance data message may include any assistance data required by the terminal device to perform necessary DL-PRS measurement, and the LPP provide assistance data message may be the first positioning information in the method 300.

For example, the LPP provide assistance data message may include configuration information of a plurality of PRSs. For example, the LPP provide assistance data message includes configuration information of two PRSs: configuration information of a PRS #1 and configuration information of a PRS #2. The PRS #1 is associated with a cell corresponding to a satellite #1, and the PRS #2 is associated with a cell corresponding to a satellite #2. The LPP provide assistance data message may further include indication information #1, and the indication information #1 may indicate whether the UE measures only a PRS of a current serving cell after receiving the LPP provide assistance data message. The PRS #1 may correspond to the first PRS in the method 300, the PRS #2 may correspond to the second PRS in the method 300, the satellite #1 may correspond to the second network device in the method 300, the satellite #2 may correspond to the third network device in the method 300, and the indication information #1 may correspond to the first indication information in the method 300.

Alternatively, the LPP provide assistance data message may not include indication information #1, that is, the indication information #1 may be delivered separately.

In a possible implementation, the indication information #1 may be 1-bit information. When a bit value is 1, it indicates that the terminal device measures only the PRS of the current serving cell.

In a possible implementation, the indication information #1 may be 1-bit information. When a bit value is 1, it indicates that the terminal device measures only the PRS of the current serving cell; or when a bit value is 0, it indicates that the terminal device measures PRSs corresponding to the current serving cell and a non-serving cell.

S603: The terminal device receives the PRS #1 based on the configuration information of the PRS #1.

For example, the current serving cell of the terminal device is a cell corresponding to the satellite #1. After receiving the LPP provide assistance data message, the terminal device may receive and measure the PRS #1 based on the configuration information of the PRS #1, to obtain the first measurement quantity, and report the first measurement quantity to the LMF. After receiving the first measurement quantity, the LMF may position the terminal device based on the first measurement quantity.

Optionally, the first measurement quantity may include at least one of a receive-transmit time difference (Rx-Tx time difference) of the terminal device corresponding to the PRS #1, a subframe offset of a receive-transmit time difference (Rx-Tx time difference subframe offset) of the terminal device, and a downlink timing drift (DL timing drift).

The receive-transmit time difference of the terminal device is defined as T_{UE-RX}-T_{UE-TX} in a standard protocol, where T_{UE-RX} is timing of a downlink subframe #i received by the terminal device from a TP, and is defined by a first detection path in time. T_{UE-TX} is sending timing of the UE for an uplink subframe #j closest to the subframe #i received from the TP in time. Based on an indication of a higher layer, a plurality of DL PRSs or a channel state reference signal (channel state information reference signal, CSI-RS) that is used for tracking a resource may be used to determine a start of a subframe of a first arrival path of the TP.

The subframe offset of the receive-transmit time difference of the terminal device may be an index of a quantity of subframes between the uplink subframe #j and an uplink subframe #i. The uplink subframe #j may be closest, in time, to the downlink subframe #i received from the TP, and i is an index of a downlink subframe in the receive-transmit time difference of the terminal device.

The downlink timing drift may be a change rate of downlink latency caused by Doppler on a serving link within a measurement period of the receive-transmit time difference of the terminal device, and a unit may be ppm.

S604: After the serving cell is switched, the terminal device receives the PRS #2 based on the configuration information of the PRS #2.

For example, after the serving cell of the terminal device is switched from the cell corresponding to the satellite #1 to the cell corresponding to a satellite #2, the terminal device may receive and measure the PRS #2 based on the configuration information of the PRS #2, to obtain the second measurement quantity, and report the second measurement quantity to the LMF. After receiving the second measurement quantity, the LMF may position the terminal device based on the second measurement quantity.

Optionally, the second measurement quantity includes at least one of a receive-transmit time difference of the terminal device corresponding to the PRS #2, the subframe offset of the receive-transmit time difference of the terminal device, and the downlink timing drift.

In this embodiment of this application, indication information is added to the LPP provide assistance data message. In this way, after each time the serving cell is switched, the network side does not need to reconfigure location assistance information for the terminal device, thereby reducing signaling overheads. In addition, the terminal device does not need to measure a plurality of PRSs at the same time after the serving cell is switched, thereby reducing energy consumption on the terminal device side.

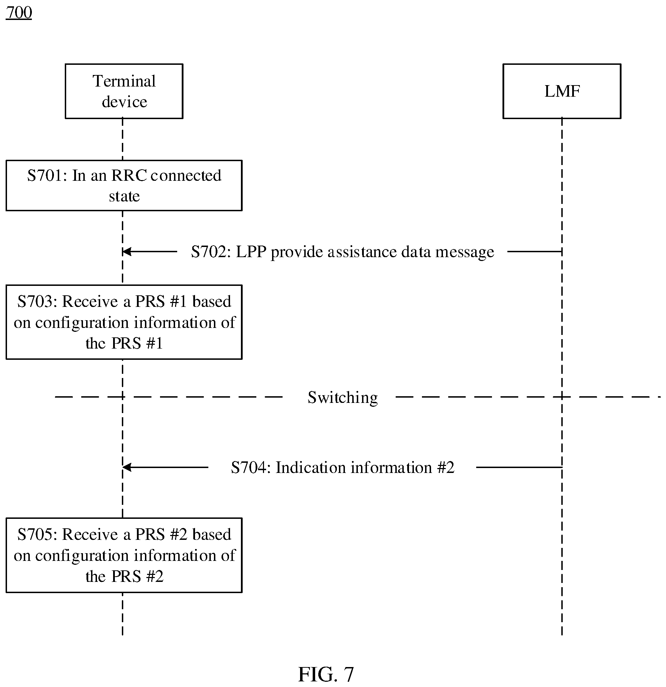

FIG. 7 is a schematic flowchart of a positioning method according to an embodiment of this application. The method 700 may be specific descriptions of step S301 to step S305 in the method 300. The method 700 may include step S701 to step S705.

S701: The terminal device is in an RRC connected state.

This step may also be understood as that the terminal device establishes an RRC connection, that is, the terminal device establishes a connection to a network device (for example, the LMF), and may perform data transmission and communication services.

S702: The LMF sends an LPP provide assistance data message to the terminal device.

The LPP provide assistance data message may include any assistance data required by the terminal device to perform necessary DL-PRS measurement, and the LPP provide assistance data message may be the first positioning information in the method 300.

For example, the LPP provide assistance data message may include configuration information of a plurality of PRSs. For example, the LPP provide assistance data message includes configuration information of two PRSs: configuration information of a PRS #1 and configuration information of a PRS #2. The PRS #1 is associated with a cell corresponding to a satellite #1, and the PRS #2 is associated with a cell corresponding to a satellite #2. The LPP provide assistance data message may further include indication information #1, and the indication information #1 may indicate whether the UE measures only a PRS of a current serving cell after receiving the LPP provide assistance data message. The PRS #1 may correspond to the first PRS in the method 300, the PRS #2 may correspond to the second PRS in the method 300, the satellite #1 may correspond to the second network device in the method 300, the satellite #2 may correspond to the third network device in the method 300, and the indication information #1 may correspond to the first indication information in the method 300.

Alternatively, the LPP provide assistance data message may not include indication information #1, that is, the indication information #1 may be delivered separately.

In a possible implementation, the indication information #1 may be 1-bit information. When a bit value is 1, it indicates that the terminal device measures only the PRS of the current serving cell.

In a possible implementation, the indication information #1 may be 1-bit information. When a bit value is 1, it indicates that the terminal device measures only the PRS of the current serving cell; or when a bit value is 0, it indicates that the terminal device measures PRSs corresponding to the current serving cell and a non-serving cell.

S703: The terminal device receives the PRS #1 based on the configuration information of the PRS #1.

For example, the current serving cell of the terminal device is a cell corresponding to the satellite #1. After receiving the LPP provide assistance data message, the terminal device may receive and measure the PRS #1 based on the configuration information of the PRS #1, to obtain the first measurement quantity, and report the first measurement quantity to the LMF. After receiving the first measurement quantity, the LMF may position the terminal device based on the first measurement quantity.

Optionally, the first measurement quantity includes at least one of a receive-transmit time difference of the terminal device corresponding to the PRS #1, a subframe offset of a receive-transmit time difference of the terminal device, and a downlink timing drift.

S704: The LMF sends indication information #2 to the terminal device.

For example, after the serving cell of the terminal device is switched from the cell corresponding to the satellite #1 to the cell corresponding to the satellite #2, the LMF may send the indication information #2 to the terminal device. The indication information #2 may indicate whether the terminal device starts to measure the PRS #2 based on the configuration information of the PRS #2. The indication information #2 may be the second indication information in the method 300.

Optionally, the indication information #2 may alternatively be carried in a cell switching command.

Optionally, after serving cell switching occurs, when the terminal device does not receive the indication information #1, the terminal device may continue to measure the PRS #1 based on the configuration information of the PRS #1.

Optionally, the indication information #2 may be 1-bit information. When a bit value is 0, it may indicate that the terminal device continues to perform measurement based on the configuration information of the PRS #1. When a bit value is 1, it may indicate that the terminal device perform measurement based on the configuration information of the PRS #2.

S705: The terminal device receives the PRS #2 based on the configuration information of the PRS #2.

For example, after the terminal device receives the indication information #2, the terminal device receives the PRS #2 based on the configuration information of the PRS #2, to obtain the second measurement quantity, and reports the second measurement quantity to the LMF. After receiving the second measurement quantity, the LMF may position the terminal device based on the second measurement quantity.

Optionally, the second measurement quantity includes at least one of a receive-transmit time difference of the terminal device corresponding to the PRS #2, the subframe offset of the receive-transmit time difference of the terminal device, and the downlink timing drift.

In this embodiment of this application, the indication information #1 is added to the LPP provide assistance data message. In this way, after each time the serving cell is switched, the network side does not need to reconfigure assistance information for the terminal device, thereby reducing signaling overheads. In addition, the terminal device does not need to measure a plurality of PRSs at the same time after the serving cell is switched, thereby reducing energy consumption on the terminal device side. In addition, after serving cell switching occurs, the LMF may indicate, based on the indication information #2, the terminal device to measure a PRS of a new serving cell. This can ensure that the terminal device measures the PRS in a timely manner, thereby helping reduce positioning latency.

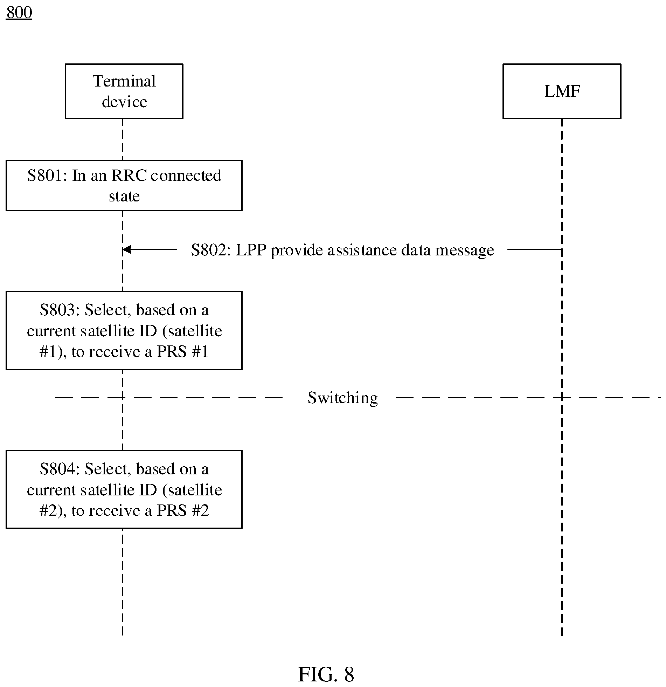

FIG. 8 is a schematic flowchart of another positioning method according to an embodiment of this application. The method 800 may be specific descriptions of step S401 to step S403 in the method 400. The method 800 may include step S801 to step S804.

S801: The terminal device is in an RRC connected state.

This step may also be understood as that the terminal device establishes an RRC connection, that is, the terminal device establishes a connection to a network device (for example, the LMF), and may perform data transmission and communication services.

S802: The LMF sends an LPP provide assistance data message to the terminal device.

The LPP provide assistance data message may include any assistance data required by the terminal device to perform necessary DL-PRS measurement, and the LPP provide assistance data message may be the second positioning information in the method 400.

For example, the LPP provide assistance data message may include configuration information of a plurality of PRSs. For example, the LPP provide assistance data message includes configuration information of two PRSs: configuration information of a PRS #1 and configuration information of a PRS #2. The PRS #1 is associated with a cell corresponding to a satellite #1, and the PRS #2 is associated with a cell corresponding to a satellite #2. In addition, the LPP provide assistance data message may carry a binding relationship between a PRS ID and a satellite ID. The PRS #1 may correspond to the first PRS in the method 300, the PRS #2 may correspond to the second PRS in the method 300, the satellite #1 may correspond to the second network device in the method 300, and the satellite #2 may correspond to the third network device in the method 300.

Optionally, the LPP provide assistance data message may not include a binding relationship between a PRS ID and a satellite ID, and the LMF may separately deliver the binding relationship between a PRS ID and a satellite ID to the terminal device.

Alternatively, the binding relationship between a PRS ID and a satellite ID may be replaced with a binding relationship between a PRS ID and a TPR ID.

In a possible implementation, the satellite ID may be added to NR-DL-PRS-AssistanceDataPerTRP. Example code is as follows:

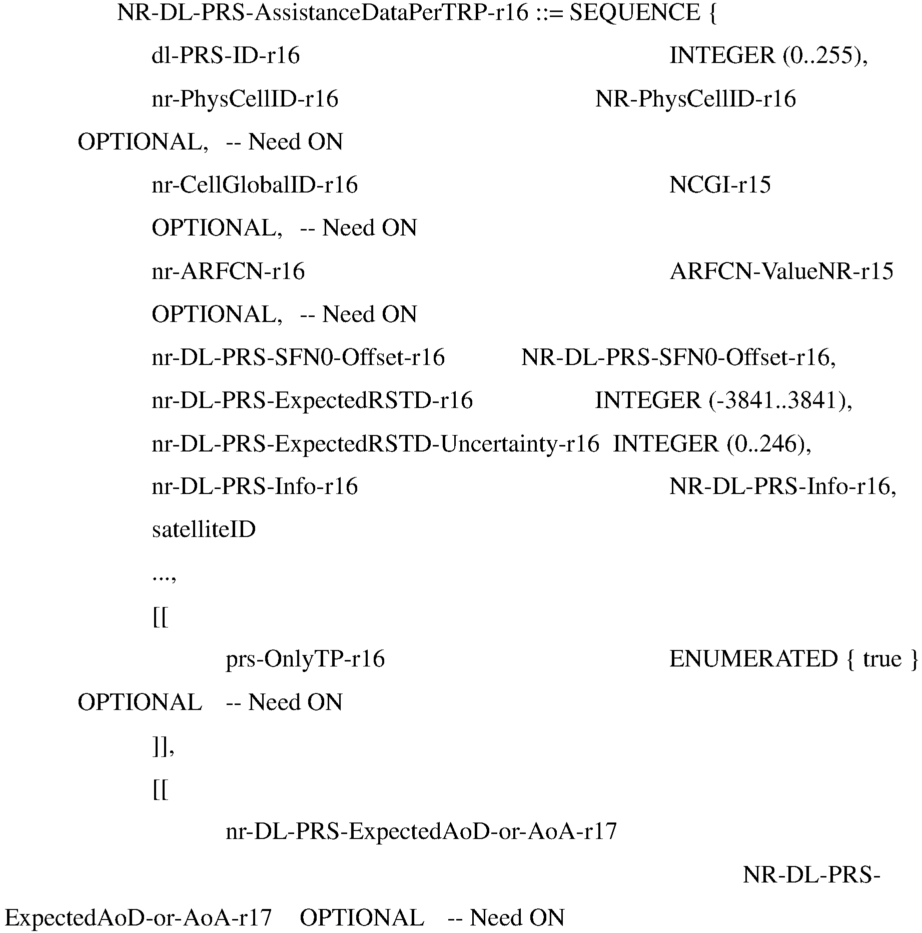

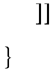

S803: The terminal device selects based on a current satellite ID (the satellite #1), to receive the PRS #1.

For example, the terminal device may select, based on a satellite ID (the satellite #1) corresponding to a current serving cell, to receive and measure the PRS #1, to obtain the first measurement quantity, and report the first measurement quantity to the LMF. After receiving the first measurement quantity, the LMF may position the terminal device based on the first measurement quantity.

Optionally, the first measurement quantity includes at least one of a receive-transmit time difference of the terminal device corresponding to the PRS #1, a subframe offset of a receive-transmit time difference of the terminal device, and a downlink timing drift.

S804: The terminal device selects, based on a current satellite ID (the satellite #2), to receive the PRS #2.

For example, after the serving cell of the terminal device is switched from the cell corresponding to the satellite #1 to the cell corresponding to the satellite #2, the terminal device may select, based on the satellite ID (the satellite #2) after switching, to receive and measure the PRS #2, to obtain the second measurement quantity, and report the second measurement quantity to the LMF. After receiving the second measurement quantity, the LMF may position the terminal device based on the second measurement quantity.

Optionally, the second measurement quantity includes at least one of a receive-transmit time difference of the terminal device corresponding to the PRS #2, the subframe offset of the receive-transmit time difference of the terminal device, and the downlink timing drift.

In this embodiment of this application, the binding relationship between the PRS ID and the satellite ID is added to the LPP provide assistance data message. In this way, after each time the serving cell is switched, the network side does not need to reconfigure assistance information for the terminal device, thereby reducing signaling overheads. In addition, the terminal device does not need to measure a plurality of PRSs at the same time after the serving cell is switched, thereby reducing energy consumption on the terminal device side.

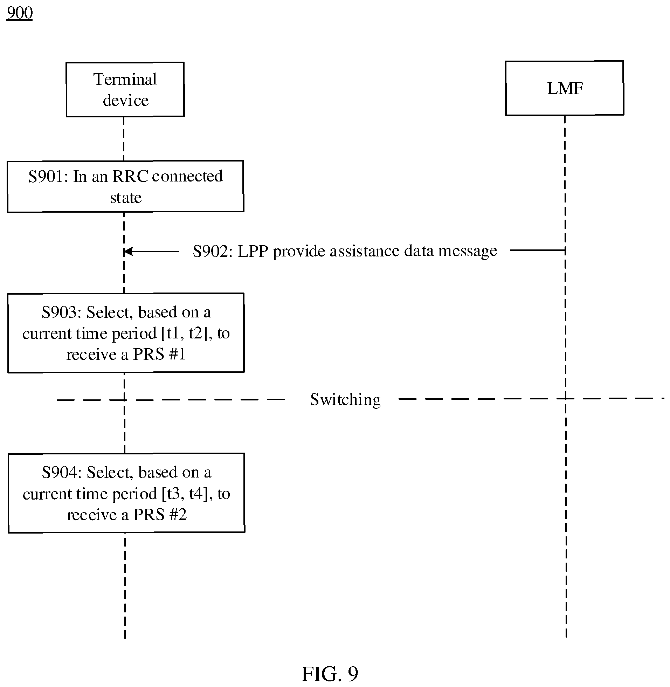

FIG. 9 is a schematic flowchart of another positioning method according to an embodiment of this application.

This step may also be understood as that the terminal device establishes an RRC connection, that is, the terminal device establishes a connection to a network device (for example, the LMF), and may perform data transmission and communication services.

S902: The LMF sends an LPP provide assistance data message to the terminal device.

The LPP provide assistance data message may include any assistance data required by the terminal device to perform necessary DL-PRS measurement, and the LPP provide assistance data message may be the second positioning information in the method 400.

For example, the LPP provide assistance data message may include configuration information of a plurality of PRSs. For example, the LPP provide assistance data message includes configuration information of two PRSs: configuration information of a PRS #1 and configuration information of a PRS #2. The PRS #1 is associated with a cell corresponding to a satellite #1, and the PRS #2 is associated with a cell corresponding to a satellite #2. In addition, the LPP provide assistance data message may carry a binding relationship between a PRS ID and a time period. Example code is as follows:

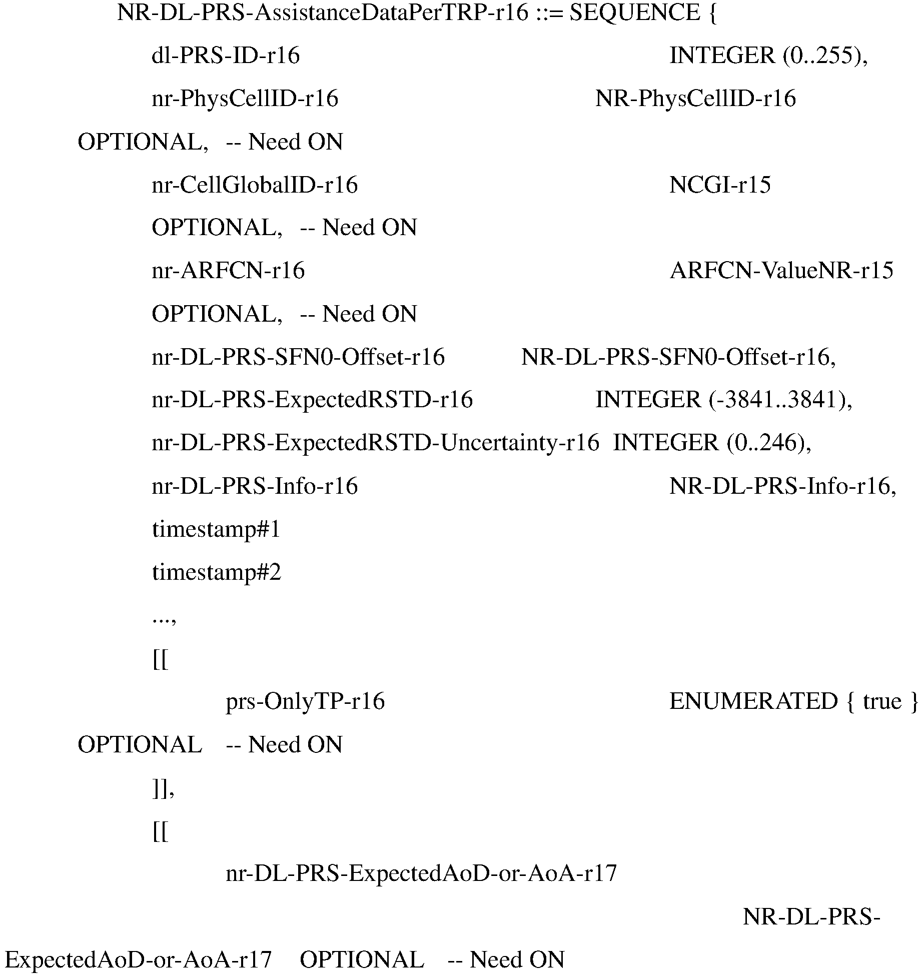

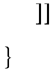

Optionally, the PRS #1 may be bound to a time period [t1, t2], and the PRS #2 may be bound to a time period [t3, t4], where t3>t2. The time period [t1, t2] may be the first time period in the method 400, and the time period [t3, t4] may be the second time period in the method 400.

Alternatively, the binding relationship between a PRS ID and a time period may be replaced with a binding relationship between a PRS ID and a reference location. For example, when a distance between the terminal device and the reference location is less than or equal to the first preset distance, this case may correspond to the PRS #1. When the distance between the terminal device and the reference location is greater than the first preset distance, and/or the distance between the terminal device and the reference location is less than or equal to the second preset distance, this case may correspond to the PRS #2. For another example, when a distance between the terminal device and the reference location is greater than a third preset distance, this case may correspond to the PRS #1. When the distance between the terminal device and the reference location is greater than a fourth preset distance, this case may correspond to the PRS #2. For another example, when a distance between the terminal device and the reference location is less than a fifth preset distance, this case may correspond to the PRS #1. When the distance between the terminal device and the reference is less than a sixth preset distance, this case may correspond to the PRS #2. The reference location may be a location of the satellite #1 and/or a location of the satellite #2.

Alternatively, the binding relationship between the PRS ID and the time period may be replaced with a binding relationship between a PRS ID and an elevation angle or a depression angle between the terminal device and a satellite. For example, when an elevation angle between the terminal device and the satellite #1 is less than a first elevation angle, this case may correspond to the PRS #1. When an elevation angle between the terminal device and the satellite #2 is greater than a second elevation angle, this case may correspond to the PRS #2.

Alternatively, the binding relationship between a PRS ID and a time period may be replaced with a binding relationship between a PRS ID and remaining service time or remaining coverage time of a serving cell. For example, when remaining service time of the cell corresponding to the first satellite is less than first time, this case may correspond to the PRS #1. When remaining service time of the cell corresponding to the second satellite is less than second time, this case may correspond to the PRS #2.

S903: The terminal device selects, based on the current time period [t1, t2], to receive the PRS #1.

For example, the terminal device may select, based on the current time period [t1, t2], to receive and measure the PRS #1, to obtain the first measurement quantity, and report the first measurement quantity to the LMF. After receiving the first measurement quantity, the LMF may position the terminal device based on the first measurement quantity.

Optionally, the first measurement quantity includes at least one of a receive-transmit time difference of the terminal device corresponding to the PRS #1, a subframe offset of a receive-transmit time difference of the terminal device, and a downlink timing drift.

S904: The terminal device selects, based on the current time period [t3, t4], to receive the PRS #2.

For example, after the serving cell of the terminal device is switched from the cell corresponding to the satellite #1 to the cell corresponding to the satellite #2, the terminal device may select, based on the current time period [t3, t4], to receive the PRS #2 and measure the PRS #2, to obtain the second measurement quantity, and report the second measurement quantity to the LMF. After receiving the second measurement quantity, the LMF may position the terminal device based on the second measurement quantity.

Optionally, the second measurement quantity includes at least one of a receive-transmit time difference of the terminal device corresponding to the PRS #2, the subframe offset of the receive-transmit time difference of the terminal device, and the downlink timing drift.

In this embodiment of this application, the binding relationship between a PRS ID and a time period is added to the LPP provide assistance data message. In this way, after each time the serving cell is switched, the network side does not need to reconfigure assistance information for the terminal device, thereby reducing signaling overheads. In addition, the terminal device does not need to measure a plurality of PRSs at the same time after the serving cell is switched, thereby reducing energy consumption on the terminal device side.

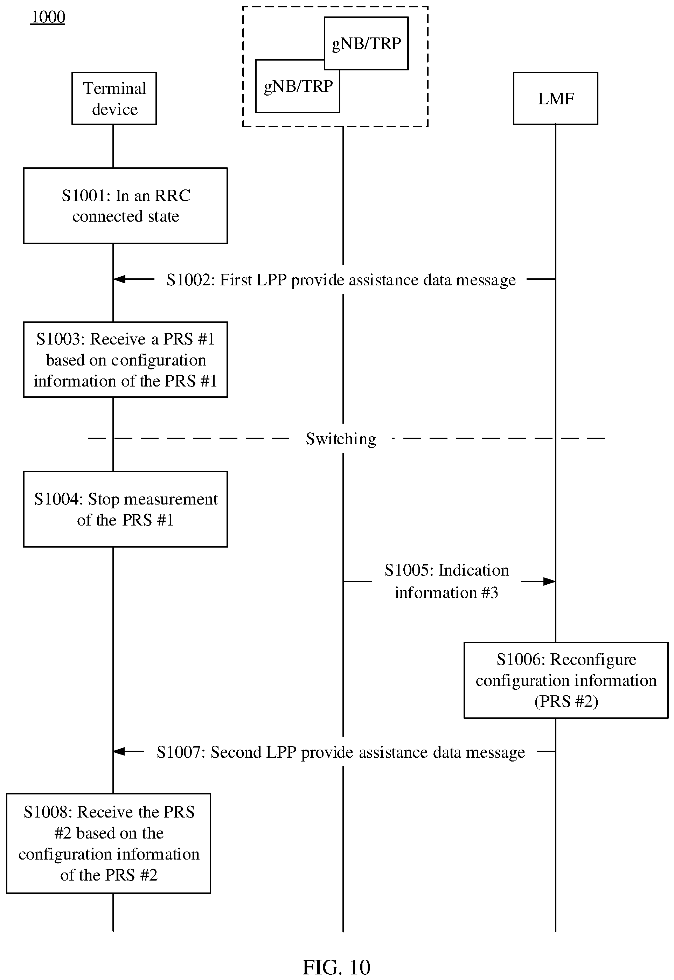

FIG. 10 is a schematic flowchart of another positioning method according to an embodiment of this application. The method 1000 may be specific descriptions of step S501 to step S509 in the method 500. The method 1000 may include step S1001 to step S1008.

S1001: The terminal device is in an RRC connected state.

This step may also be understood as that the terminal device establishes an RRC connection, that is, the terminal device establishes a connection to a network device (for example, the LMF), and may perform data transmission and communication services.

S1002: The LMF sends a first LPP provide assistance data message to the terminal device.

For example, the first LPP provide assistance data message may include configuration information of a PRS #1, and the PRS #1 is associated with a cell corresponding to a satellite #1. The first LPP provide assistance data message may be the third positioning information in the method 500, and the satellite #1 may correspond to the second network device in the method 500.

S1003: The terminal device receives the PRS #1 based on the configuration information of the PRS #1.

For example, the current serving cell of the terminal device is the cell corresponding to the satellite #1. After receiving the LPP provide assistance data message, the terminal device may receive and measure the PRS #1 based on the configuration information of the PRS #1, to obtain the first measurement quantity, and report the first measurement quantity to the LMF. After receiving the first measurement quantity, the LMF may position the terminal device based on the first measurement quantity.

Optionally, the first measurement quantity may include at least one of a receive-transmit time difference of the terminal device corresponding to the PRS #1, a subframe offset of a receive-transmit time difference of the terminal device, and a downlink timing drift.

S1004: After the serving cell is switched, the terminal device stops measurement of the PRS #1.

For example, after the serving cell of the terminal device is switched from the cell corresponding to the satellite #1 to a cell corresponding to a satellite #2, the terminal device may stop measurement of a PRS of a source cell.

Optionally, the LMF, a gNB, or a TRP may deliver indication information #4 to the terminal device in a cell switching command, or before or after cell switching, to indicate the terminal device to stop measurement of the PRS #1.

S1005: The gNB or the TPR sends indication information #3 to the LMF.

For example, the indication information indicates the LMF to reconfigure a PRS #2, the PRS #2 is associated with the cell corresponding to the satellite #2, the indication information #3 may be the third indication information in the method 500, the satellite #2 may be the third network device in the method 500, and the gNB or the TPR may be the fourth network device in the method 500.

S1006: The LMF reconfigures the configuration information PRS #2.

For example, after receiving the indication information #3, the LMF may reconfigure the configuration information of the PRS #2.

S1007: The LMF sends a second LPP provide assistance data message to the terminal device.

For example, the second LPP provide assistance data message includes the configuration information of the PRS #2, and the second LPP provide assistance data message may be the fourth positioning information in the method 500.

S1008: The terminal device receives the PRS #2 based on the configuration information of the PRS #2.

For example, the terminal device may receive and measure the PRS #2 based on the configuration information of the PRS #2, to obtain the second measurement quantity, and report the second measurement quantity to the LMF. After receiving the second measurement quantity, the LMF may position the terminal device based on the second measurement quantity.

Optionally, the second measurement quantity includes one or more of a receive-transmit time difference of the terminal device corresponding to the PRS #2, the subframe offset of the receive-transmit time difference of the terminal device, and the downlink timing drift.

In this embodiment of this application, when the network side configures only configuration information of one PRS, and a PCI switching scenario is not changed, a new PRS (for example, the PRS #2) cannot be directly configured, and there is a need to wait for the LMF to trigger a related positioning procedure. After cell switching, the gNB/TRP directly sends the indication information #3 to the LMF, to request the LMF to directly configure the new PRS. This can reduce positioning latency.

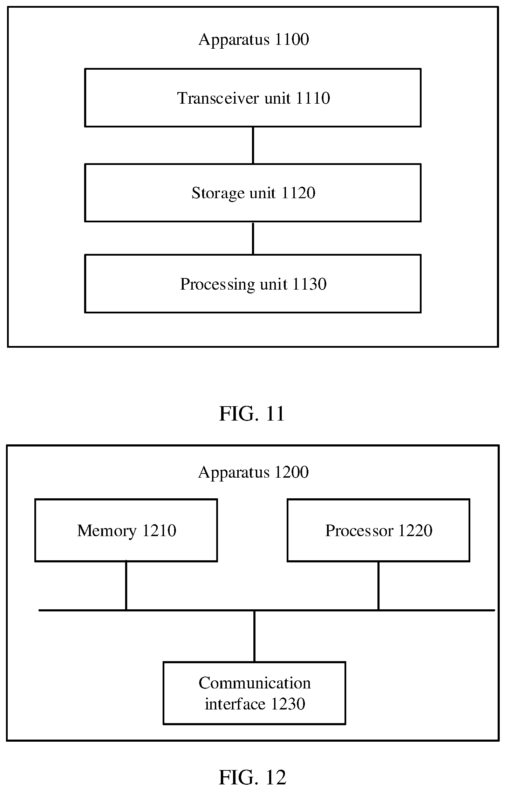

FIG. 11 is a diagram of a positioning apparatus 1100 according to an embodiment of this application. The apparatus 1100 may include a transceiver unit 1110, a storage unit 1120, and a processing unit 1130. The transceiver unit 1110 is configured to receive and send corresponding instructions and/or data, and the transceiver unit 1110 may alternatively be referred to as a communication interface or a communication unit. The storage unit 1120 is configured to implement a corresponding storage function and store corresponding instructions and/or data. The processing unit 1130 is configured to process data, so that the apparatus 1100 implements the foregoing positioning methods.

In a design, the apparatus 1100 may be configured to perform actions performed by the terminal device in the foregoing method embodiments.

In an embodiment, a serving cell of the apparatus 1100 is a first cell, and the apparatus 1100 includes the transceiver unit 1110 and the processing unit 1130. The transceiver unit 1110 is configured to receive first positioning information sent by a first network device. The first positioning information includes configuration information of a first positioning reference signal PRS, configuration information of a second PRS, and first indication information, and the first indication information indicates the terminal device to measure a PRS corresponding to a serving cell, or the first indication information indicates the terminal device to measure PRSs corresponding to a serving cell and a non-serving cell. The processing unit 1130 is configured to: determine a first measurement quantity based on the configuration information of the first PRS and the first indication information, where the first measurement quantity indicates a receive-transmit time difference corresponding to the first PRS; and when the serving cell of the terminal device is switched from the first cell to a second cell, determine a second measurement quantity based on the configuration information of the second PRS, where the second measurement quantity indicates a receive-transmit time difference corresponding to the second PRS.

In a possible implementation, the first indication information is bit information, and when the bit information is a first value, the first indication information indicates the terminal device to measure the PRS corresponding to the serving cell.

In a possible implementation, the first indication information is bit information, and when the bit information is a second value, the first indication information indicates the terminal device to measure the PRSs corresponding to the serving cell and the non-serving cell.

In a possible implementation, the transceiver unit 1110 is further configured to send the first measurement quantity to the first network device, and/or send the second measurement quantity to the first network device.

In a possible implementation, the first indication information indicates the terminal device to measure the PRS corresponding to the serving cell. The transceiver unit 1110 is further configured to receive second indication information sent by the first network device. The second indication information indicates the terminal device to measure the second PRS.

In a possible implementation, the first measurement quantity further includes a first downlink timing drift and a subframe offset of the receive-transmit time difference corresponding to the first PRS, and the second measurement quantity further includes a second downlink timing drift and a subframe offset of the receive-transmit time difference corresponding to the second PRS.

In a possible implementation, the first cell is a cell served by a second network device, and the second cell is a cell served by a third network device.

In an embodiment, a serving cell of the apparatus 1000 is a first cell, and the apparatus includes the transceiver unit 1110 and the processing unit 1130. The transceiver unit 1110 is configured to receive second positioning information sent by a first network device. The second positioning information includes configuration information of a first PRS, configuration information of a second PRS, first identification information, and second identification information, the configuration information of the first PRS is associated with the first identification information, and the configuration information of the second PRS is associated with the second identification information. The processing unit 1130 is configured to: determine a first measurement quantity based on the configuration information of the first PRS and the first identification information, where the first measurement quantity indicates a receive-transmit time difference corresponding to the first PRS; and when the serving cell of the terminal device is switched from the first cell to a second cell, determine a second measurement quantity based on the configuration information of the second PRS and the second identification information, where the second measurement quantity indicates a receive-transmit time difference corresponding to the second PRS.

In a possible implementation, the first identification information is identification information corresponding to a second network device, a cell served by the second network device is the first cell, the second identification information is identification information corresponding to a third network device, and a cell served by the third network device is the second cell.

In a possible implementation, the first identification information identifies a first time period, the second identification information identifies a second time period, and a start moment of the second time period is later than an end moment of the first time period. The processing unit 1130 is specifically configured to: measure the first PRS within the first time period based on the configuration information of the first PRS, to obtain the first measurement quantity; and measure the second PRS within the second time period based on the configuration information of the second PRS, to obtain the second measurement quantity.

In a possible implementation, the first identification information identifies a first preset distance, and the second identification information identifies a second preset distance. The processing unit 1130 is specifically configured to: when a distance between the terminal device and the second network device is less than or equal to a first preset distance, measure the first PRS based on the configuration information of the first PRS, to obtain the first measurement quantity; and when the distance between the terminal device and the third network device is greater than the first preset distance, and/or a distance between the terminal device and the third network device is less than or equal to a second preset distance, measure the second PRS based on the configuration information of the second PRS, to obtain the second measurement quantity.

In a possible implementation, the transceiver unit 1110 is further configured to send the first measurement quantity to the first network device, and/or send the second measurement quantity to the first network device.

In a possible implementation, the first measurement quantity further includes a first downlink timing drift and a subframe offset of the receive-transmit time difference corresponding to the first PRS, and the second measurement quantity further includes a second downlink timing drift and a subframe offset of the receive-transmit time difference corresponding to the second PRS.

In a possible implementation, the first cell is a cell served by a second network device, and the second cell is a cell served by a third network device.

In an embodiment, a serving cell of the apparatus 1100 is the first cell, and the apparatus includes the transceiver unit 1110 and the processing unit 1130. The transceiver unit 1110 is configured to receive third positioning information sent by a first network device. The third positioning information includes configuration information of a first PRS. The processing unit 1130 is configured to: measure the first PRS based on the configuration information of the first PRS, to obtain a first measurement quantity, where the first measurement quantity indicates a receive-transmit time difference corresponding to the first PRS; and when the serving cell of the terminal device is switched from the first cell to a second cell, stop measurement of the first PRS.

In a possible implementation, the transceiver unit 1110 is further configured to receive fourth positioning information sent by the first network device. The fourth positioning information includes configuration information of a second PRS. The processing unit 1130 is further configured to measure the second PRS based on the configuration information of the second PRS, to obtain a second measurement quantity. The second measurement quantity indicates a receive-transmit time difference corresponding to the second PRS.

In a possible implementation, the transceiver unit 1110 is further configured to send the first measurement quantity to the first network device, and/or send the second measurement quantity to the first network device.

In a possible implementation, the first measurement quantity further includes a first downlink timing drift and a subframe offset of the receive-transmit time difference corresponding to the first PRS, and the second measurement quantity further includes a second downlink timing drift and a subframe offset of the receive-transmit time difference corresponding to the second PRS.

In a possible implementation, the first cell is a cell served by a second network device, and the second cell is a cell served by a third network device.

In a design, the apparatus 1100 may be configured to perform actions performed by the fourth network device in the foregoing method embodiments.

In an embodiment, the apparatus 1100 establishes a communication connection to a terminal device, a serving cell of the terminal device is the first cell, and the apparatus 1100 includes the transceiver unit 1110. The transceiver unit 1110 is configured to send third indication information to a first network device when the serving cell of the terminal device is switched from the first cell to a second cell. The third indication information indicates the first network device to configure configuration information of a second PRS.

In a design the apparatus 1100 may be configured to perform actions performed by the first network device in the foregoing method embodiments.

In an embodiment, the apparatus 1100 establishes a communication connection to a terminal device, a serving cell of the terminal device is a first cell, and the apparatus 1100 includes the transceiver unit 1110 and the processing unit 1130. The transceiver unit 1110 is configured to receive third indication information sent by a fourth network device. The third indication information indicates the first network device to configure configuration information of a second PRS. The processing unit 1130 is configured to configure the configuration information of the second PRS based on the third indication information. The transceiver unit 1110 is further configured to send fourth positioning information to the terminal device. The fourth positioning information includes the configuration information of the second PRS.

In a possible implementation, the first cell is a cell served by a second network device, and the second cell is a cell served by a third network device.

FIG. 12 is a diagram of another positioning apparatus 1200 according to an embodiment of this application.

The apparatus 1200 includes a memory 1210, a processor 1220, and a communication interface 1230. The memory 1210, the processor 1220, and the communication interface 1230 are connected through an internal connection path. The memory 1210 is configured to store instructions. The processor 1220 is configured to execute the instructions stored in the memory 1210, to control the communication interface 1230 to obtain information, or enable the apparatus 1200 to implement the foregoing positioning method. Optionally, the memory 1210 may be coupled to the processor 1220 through an interface, or may be integrated with the processor 1220.

It should be noted that the communication interface 1230 uses a transceiver apparatus, for example, but not limited to, a transceiver. The communication interface 1230 may further include an input/output interface (input/output interface).

The processor 1220 stores one or more computer programs, and the one or more computer programs include instructions. When the instructions are run by the processor 1220, the apparatus 1200 is enabled to perform the positioning method in the foregoing embodiments.

In an implementation process, steps in the foregoing methods can be implemented by using a hardware integrated logic circuit in the processor 1220, or by using instructions in a form of software. The method of the communication disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory 1210. The processor 1220 reads information from the memory 1210, and performs the steps of the foregoing method in combination with hardware of the processor. To avoid repetition, details are not described herein again.

Optionally, the communication interface 1230 in FIG. 12 may implement the transceiver unit 1110 in FIG. 11, and the processor 1220 in FIG. 12 may implement the processing unit 1130 in FIG. 11.

An embodiment of this application further provides a computer-readable storage medium. The computer-readable storage medium stores program code. When the computer program code is run on a computer, the computer is enabled to perform any one of the methods in FIG. 3 to FIG. 10.

An embodiment of this application further provides a computer program product. The computer product includes a computer program. When the computer program is run, a computer is enabled to perform any one of the methods in FIG. 3 to FIG. 10.

An embodiment of this application further provides a chip, including a circuit. The circuit is configured to perform any one of the methods in FIG. 3 to FIG. 10.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located at one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A positioning method, wherein the method is applied to a terminal device, a serving cell of the terminal device is a first cell, and the method comprises:
receiving first positioning information sent by a first network device, wherein the first positioning information comprises configuration information of a first positioning reference signal PRS, configuration information of a second PRS, and first indication information, and the first indication information indicates the terminal device to measure a PRS corresponding to the serving cell, or the first indication information indicates the terminal device to measure PRSs corresponding to the serving cell and a non-serving cell;
determining a first measurement quantity based on the configuration information of the first PRS and the first indication information, wherein the first measurement quantity indicates a receive-transmit time difference corresponding to the first PRS; and
when the serving cell of the terminal device is switched from the first cell to the second cell, determining a second measurement quantity based on the configuration information of the second PRS, wherein the second measurement quantity indicates a receive-transmit time difference corresponding to the second PRS.

2. The method according to claim 1, wherein the first indication information is bit information, and when the bit information is a first value, the first indication information indicates the terminal device to measure the PRS corresponding to the serving cell.

3. The method according to claim 1, wherein the first indication information is bit information, and when the bit information is a second value, the first indication information indicates the terminal device to measure the PRSs corresponding to the serving cell and the non-serving cell.

4. The method according to any one of claims 1 to 3, wherein the method further comprises:
sending the first measurement quantity to the first network device, and/or sending the second measurement quantity to the first network device.

5. The method according to any one of claims 1 to 4, wherein the first indication information indicates the terminal device to measure the PRS corresponding to the serving cell; and
before determining the second measurement quantity based on the configuration information of the second PRS, the method further comprises:
receiving second indication information sent by the first network device, wherein the second indication information indicates the terminal device to measure the second PRS.

6. The method according to any one of claims 1 to 5, wherein the first measurement quantity further comprises a first downlink timing drift and a subframe offset of the receive-transmit time difference corresponding to the first PRS, and the second measurement quantity further comprises a second downlink timing drift and a subframe offset of the receive-transmit time difference corresponding to the second PRS.

7. The method according to any one of claims 1 to 6, wherein the first cell is a cell served by a second network device, and the second cell is a cell served by a third network device.

8. A positioning method, wherein the method is applied to a terminal device, a serving cell of the terminal device is a first cell, and the method comprises:
receiving second positioning information sent by a first network device, wherein the second positioning information comprises configuration information of a first PRS, configuration information of a second PRS, first identification information, and second identification information, the configuration information of the first PRS is associated with the first identification information, and the configuration information of the second PRS is associated with the second identification information;
determining a first measurement quantity based on the configuration information of the first PRS and the first identification information, wherein the first measurement quantity indicates a receive-transmit time difference corresponding to the first PRS; and
when the serving cell of the terminal device is switched from the first cell to a second cell, determining a second measurement quantity based on the configuration information of the second PRS and the second identification information, wherein the second measurement quantity indicates a receive-transmit time difference corresponding to the second PRS.

9. The method according to claim 8, wherein the first identification information is identification information corresponding to a second network device, a cell served by the second network device is the first cell, the second identification information is identification information corresponding to a third network device, and a cell served by the third network device is the second cell.

10. The method according to claim 8, wherein the first identification information identifies a first time period, the second identification information identifies a second time period, and a start moment of the second time period is later than an end moment of the first time period;
determining the first measurement quantity based on the configuration information of the first PRS and the first identification information comprises: measuring the first PRS within the first time period based on the configuration information of the first PRS, to obtain the first measurement quantity; and
determining the second measurement quantity based on the configuration information of the second PRS and the second identification information comprises: measuring the second PRS within the second time period based on the configuration information of the second PRS, to obtain the second measurement quantity.

11. The method according to claim 8, wherein the first identification information identifies a first preset distance, and the second identification information identifies a second preset distance;
determining the first measurement quantity based on the configuration information of the first PRS and the first identification information comprises: when a distance between the terminal device and a second network device is less than or equal to the first preset distance, measuring the first PRS based on the configuration information of the first PRS, to obtain the first measurement quantity, wherein a cell served by the second network device is the first cell; and
determining the second measurement quantity based on the configuration information of the second PRS and the second identification information comprises: when the distance between the terminal device and the second network device is greater than the first preset distance and/or a distance between the terminal device and a third network device is less than or equal to the second preset distance, measuring the second PRS based on the configuration information of the second PRS, to obtain the second measurement quantity, wherein a cell served by the third network device is the second cell.

12. The method according to any one of claims 8 to 11, wherein the method further comprises:
sending the first measurement quantity to the first network device, and/or sending the second measurement quantity to the first network device.

13. The method according to any one of claims 8 to 12, wherein the first measurement quantity further comprises a first downlink timing drift and a subframe offset of the receive-transmit time difference corresponding to the first PRS, and the second measurement quantity further comprises a second downlink timing drift and a subframe offset of the receive-transmit time difference corresponding to the second PRS.

14. A positioning method, wherein the method is applied to a terminal device, a serving cell of the terminal device is a first cell, and the method comprises:
receiving third positioning information sent by a first network device, wherein the third positioning information comprises configuration information of a first PRS;
measuring the first PRS based on the configuration information of the first PRS, to obtain a first measurement quantity, wherein the first measurement quantity indicates a receive-transmit time difference corresponding to the first PRS; and
stopping measurement of the first PRS when the serving cell of the terminal device is switched from the first cell to the second cell.

15. The method according to claim 14, wherein the method further comprises:
receiving fourth positioning information sent by the first network device, wherein the fourth positioning information comprises configuration information of a second PRS; and
measuring the second PRS based on the configuration information of the second PRS, to obtain a second measurement quantity, wherein the second measurement quantity indicates a receive-transmit time difference corresponding to the second PRS.

16. The method according to claim 14 or 15, wherein the method further comprises:
sending the first measurement quantity to the first network device, and/or sending the second measurement quantity to the first network device.

17. The method according to any one of claims 14 to 16, wherein the first measurement quantity further comprises a first downlink timing drift and a subframe offset of the receive-transmit time difference corresponding to the first PRS, and the second measurement quantity further comprises a second downlink timing drift and a subframe offset of the receive-transmit time difference corresponding to the second PRS.

18. The method according to any one of claims 14 to 17, wherein the first cell is a cell served by a second network device, and the second cell is a cell served by a third network device.

19. A positioning method, wherein the method is applied to a fourth network device, the fourth network device establishes a communication connection to a terminal device, a serving cell of the terminal device is a first cell, and the method comprises:
sending third indication information to a first network device when the serving cell of the terminal device is switched from the first cell to a second cell, wherein the third indication information indicates the first network device to configure configuration information of a second PRS.

20. The method according to claim 19, wherein the first cell is a cell served by a second network device, and the second cell is a cell served by a third network device.

21. A positioning method, wherein the method is applied to a first network device, the first network device establishes a communication connection to a terminal device, a serving cell of the terminal device is a first cell, and the method comprises:
receiving third indication information sent by a fourth network device, wherein the third indication information indicates the first network device to configure configuration information of a second PRS;
configuring the configuration information of the second PRS based on the third indication information; and
sending fourth positioning information to the terminal device, wherein the fourth positioning information comprises the configuration information of the second PRS.

22. A positioning apparatus, wherein the method comprises a unit or a module configured to perform the method according to any one of claims 1 to 21.

23. A positioning apparatus, comprising a processor and a memory, wherein the processor is coupled to the memory, the memory is configured to store a computer program or instructions, and the processor is configured to execute the computer program or the instructions in the memory, so that the method according to any one of claims 1 to 21 is performed.

24. A computer-readable storage medium, wherein the computer-readable storage medium stores program code, and when the computer program code is run on a computer, the computer is enabled to perform the method according to any one of claims 1 to 21.

25. A chip, comprising a circuit, wherein the circuit is configured to perform the method according to any one of claims 1 to 21.

26. A computer program product, wherein the computer product comprises a computer program, and when the computer program is run, a computer is enabled to perform the method according to any one of claims 1 to 21.
